# EUROPEAN PATENT APPLICATION

(11) **EP 4 480 774 A1**
(43) Date of publication of application: **25.12.2024**
(21) Application number: 24181696.6
(22) Date of filing: 12.06.2024
(51) Int. Cl.: B60W 40/06, B60W 40/076

(54) **METHOD TO DETECT AND MANAGE ICY UPHILL ROADS IN AUTONOMOUS VEHICLES**

(30) Priority: 14.06.2023 US 202318334679
(71) Applicant: Volvo Car Corporation, 405 31 Göteborg (SE)
(72) Inventor: PEREZ BARRERA, Oswaldo, 40531 Göteborg (SE)
(74) Representative: Maiwald GmbH

(57) **Abstract**

An embodiment related to a system (340), wherein the system (340) is operable to determine a road surface condition, wherein the road surface condition is at least one of an ice, wet, and snow (302); adjust, a safe distance value of the host vehicle based on the road surface condition (304); detect a vehicle type, a speed, and a visible roof area of a target vehicle (306); determine an uphill road that the host vehicle is approaching (308); determine that the target vehicle is slowing down based on a change in speed of the target vehicle in real-time (310); and determine, a collision avoidance action for the host vehicle to avoid a collision with the target vehicle (312).

## Description

### FIELD OF THE INVENTION

The present disclosure relates to the vehicle safety field. More specifically, the present disclosure relates to systems and methods for detection and managing icy uphill roads in autonomous vehicles.

### BACKGROUND

Driving on icy uphill roads can be dangerous and challenging due to reduced traction, increased sliding, stalling, longer braking distance, and reduced visibility.

Therefore, there is a need to detect and manage icy uphill roads in autonomous vehicles and, if there is a risk of collision while driving on icy uphill roads, to provide alerts and/ or to take actions to minimize or avoid the collision.

### SUMMARY

The following presents a summary to provide a basic understanding of one or more embodiments described herein. This summary is not intended to identify key or critical elements or delineate any scope of the different embodiments and/or any scope of the claims. The sole purpose of the summary is to present some concepts in a simplified form as a prelude to the more detailed description presented herein.

According to an embodiment, it is a system, comprising, a processor, a computer vision module, and a control module; wherein the system is operable to determine, by the control module of a host vehicle, a road surface condition, wherein the road surface condition is at least one of an ice, wet, and snow; adjust, by the control module of the host vehicle, a safe distance value of the host vehicle based on the road surface condition; detect, by the control module of the host vehicle, a vehicle type, a speed, and a visible roof area of a target vehicle, wherein the target vehicle is a vehicle that is ahead of the host vehicle; determine, by the control module of the host vehicle, an uphill road that the host vehicle is approaching; determine, by the control module of the host vehicle, that the target vehicle is slowing down based on a change in speed of the target vehicle in real-time; predicting, by the processor, a collision between the host vehicle and the target vehicle; determine, by the control module of the host vehicle, a collision avoidance action for the host vehicle to avoid the collision with the target vehicle.

According to an embodiment, it is a method comprising, determining, by the processor, a road surface condition, wherein the road surface condition is at least one of an ice, wet, and snow; adjusting, by the processor, a safe distance value of the host vehicle based on the road surface condition; detecting, by a computer vision module, a vehicle type, a speed, and a visible roof area of a target vehicle, wherein the target vehicle is a vehicle ahead of the host vehicle; determining, by the processor, an uphill road that the host vehicle is approaching; determining, by the processor, that the target vehicle is slowing down based on a change in speed of the target vehicle in real-time; predicting, by the processor, a collision between the host vehicle and the target vehicle; determining, by the processor, a collision avoidance action for the host vehicle to avoid the collision with the target vehicle.

According to an embodiment, it is a non-transitory computer-readable medium having stored thereon instructions executable by a computer system to perform operations comprising, determining, by the processor, a road surface condition, wherein the road surface condition is at least one of an ice, wet, and snow; adjusting, by the processor, a safe distance value of the host vehicle based on the road surface condition; detecting, by a computer vision module, a vehicle type, a speed, and a visible roof area of a target vehicle, wherein the target vehicle is a vehicle ahead of the host vehicle; determining, by the processor, an uphill road that the host vehicle is approaching; determining, by the processor, that the target vehicle is slowing down based on a change in speed of the target vehicle in real-time; predicting, by the processor, a collision between the host vehicle and the target vehicle; determining, by the processor, a collision avoidance action for the host vehicle to avoid the collision with the target vehicle.

### BRIEF DESCRIPTION OF THE FIGURES

These and other aspects of the present invention will now be described in more detail, with reference to the appended drawings showing exemplary embodiments of the present invention, in which:
FIG. 1 shows a scenario when vehicles travel on an uphill road in icy conditions according to an embodiment.
FIG. 2A is an illustration of an example autonomous vehicle with various sensors, actuators, and systems according to an embodiment.
FIG. 2B shows a block diagram of electronic components of a vehicle according to an embodiment.
FIG. 3A shows the block diagram of a method for collision avoidance based on surface road condition according to an embodiment.
FIG. 3B shows the block diagram of a system for collision avoidance based on surface road condition according to an embodiment.
FIG. 3C shows the block diagram of a method stored on a non-transitory computer-readable medium for collision avoidance based on surface road condition according to an embodiment.
FIG. 4A shows parts of a vehicle being detected using a bounding box method according to an embodiment.
FIG. 4B is a process flow diagram of a method for identifying and classifying one or more objects according to an embodiment of the invention.
FIG. 4C shows an autonomous vehicle detecting a roof of another vehicle according to an embodiment.
FIG. 4D shows an autonomous vehicle detecting a roof of another vehicle continuously according to an embodiment.
FIG. 4E shows an autonomous vehicle detecting a roof of another vehicle which is being towed by a tow truck according to an embodiment.
FIG. 4F shows an autonomous vehicle detecting a roof of another vehicle continuously according to an embodiment.
FIG. 4G shows an autonomous vehicle detecting a type, model and make of a vehicle according to an embodiment.
FIG. 4H shows an autonomous vehicle correlating the roof area with the inclination of the road based on vehicle type according to an embodiment.
FIG. 4I shows an autonomous vehicle determining an inclination of the road based on an image analysis of the road ahead according to an embodiment.
FIG. 4J shows an autonomous vehicle determining the inclination of the road according to an embodiment.
FIG. 4K shows an autonomous vehicle determining the start point of an uphill road according to an embodiment.
FIG. 4L shows an autonomous vehicle determining a road surface condition of an uphill road according to an embodiment.
FIG. 4M shows a road surface sign board warning for icy roads according to an embodiment.
FIG. 4N shows an autonomous vehicle providing an alert about the road surface condition to an occupant of another autonomous vehicle according to an embodiment.
FIG. 4O illustrates a block diagram of a lane detection system according to an embodiment.
FIG. 4P shows an autonomous vehicle detecting an end of an uphill road according to an embodiment.
FIG. 4Q shows an autonomous vehicle categorizing the uphill road according to an embodiment.
FIG. 4R shows an autonomous vehicle detecting a speed of a target vehicle in real-time according to an embodiment.
FIG. 4S shows an autonomous vehicle deciding a collision avoidance action based on a speed of a target vehicle according to an embodiment.
FIG. 5 shows a method of a host vehicle for collision avoidance on an icy uphill segment according to an embodiment.
FIG. 6 shows an example of a host vehicle alerting the nearby vehicles about the target vehicle sliding on an uphill road segment.
FIG. 7 shows example messages in Dedicated Short-Range Communications (DSRC) message format.
FIG. 8A shows an example message from the host vehicle to nearby/ neighboring vehicles according to an embodiment.
FIG. 8B shows an example message from the target vehicle to other vehicles according to an embodiment.
FIG. 8C shows an example alert message displayed in the host vehicle according to an embodiment.
FIG. 9A shows a structure of the neural network / machine learning model with a feedback loop according to an embodiment.
FIG. 9B shows a structure of the neural network / machine learning model with reinforcement learning according to an embodiment.
FIG. 9C shows an example block diagram for detecting a collision event using a machine learning model according to an embodiment.
FIG. 10 shows an example flow chart for detecting a collision event using a machine learning model according to an embodiment.
FIG. 11A shows a block diagram of the cyber security module in view of the system and server.
FIG. 11B shows an embodiment of the cyber security module according to an embodiment of the system.
FIG. 11C shows another embodiment of the cyber security module according to an embodiment of the system.

### DETAILED DESCRIPTION

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same element.

Although the detailed description herein contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs.

As used herein, the articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or clear from context to mean a singular form.

As used herein, the terms "example" and/or "exemplary" mean serving as an example, instance, or illustration. For the avoidance of doubt, such examples do not limit the herein described subject matter. In addition, any aspect or design described herein as an "example" and/or "exemplary" is not necessarily preferred or advantageous over other aspects or designs, nor does it preclude equivalent exemplary structures and techniques known to those of ordinary skill in the art.

As used herein, the terms "first," "second," "third," and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include," "have," and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

As used herein, the terms "left," "right," "front," "back," "top," "bottom," "over," "under" and the like in the description and in the claims, if any, are for descriptive purposes and not necessarily for describing permanent relative positions. The terms so used are interchangeable under appropriate circumstances such that the embodiments of the apparatus, methods, and/or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more." Where only one item is intended, the term "one" or similar language is used. Also, the terms "has," "have," "having," or the like are open-ended terms. Further, the phrase "based on" means "based, at least in part, on" unless explicitly stated otherwise.

As used herein, the terms "system," "device," "unit," and/or "module" refer to a different component, component portion, or component of the various levels of the order. However, other expressions that achieve the same purpose may replace the terms.

As used herein, the terms "couple," "coupled," "couples," "coupling," and the like refer to connecting two or more elements mechanically, electrically, and/or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably," "removable," and the like, near the word "coupled" and the like does not mean that the coupling, etc. in question is or is not removable.

As used herein, the term "or" means an inclusive "or" rather than an exclusive "or." That is, unless specified otherwise, or clear from context, "X employs A or B" means any of the natural inclusive permutations. That is, if X employs A; X employs B; or X employs both A and B, then "X employs A or B" is satisfied under any of the foregoing instances.

As used herein, two or more elements are "integral" if they comprise the same piece of material. Two or more elements are "non-integral" if each comprises a different piece of material.

### OR - (Use appropriate definition)

As used herein, two or more elements or modules are "integral" or "integrated" if they operate functionally together. Two or more elements are "non-integral" if each element can operate functionally independently.

As used herein, the term "real-time" refers to operations conducted as soon as practically possible upon occurrence of a triggering event. A triggering event can include receipt of data necessary to execute a task or to otherwise process information. Because of delays inherent in transmission and/or in computing speeds, the term "real-time" encompasses operations that occur in "near" real-time or somewhat delayed from a triggering event. In a number of embodiments, "real-time" can mean real-time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As used herein, the term "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Other specific forms may embody the present invention without departing from its spirit or characteristics. The described embodiments are in all respects illustrative and not restrictive. Therefore, the appended claims rather than the description herein indicate the scope of the invention. All variations which come within the meaning and range of equivalency of the claims are within their scope.

As used herein, the term "component" broadly construes hardware, firmware, and/or a combination of hardware, firmware, and software.

Digital electronic circuitry, or in computer software, firmware, or hardware, including the structures disclosed in this specification and their structural equivalents, or in combinations of one or more of them may realize the implementations and all of the functional operations described in this specification. Implementations may be as one or more computer program products i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data, including by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and/or methods is not limiting to the implementations. Thus, any software and any hardware can implement the systems and/or methods based on the description herein without reference to specific software code.

A computer program (also known as a program, software, software application, script, or code) is written in any appropriate form of programming language, including compiled or interpreted languages. Any appropriate form, including a standalone program or a module, component, subroutine, or other unit suitable for use in a computing environment may deploy it. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of digital computer. A processor will receive instructions and data from a read-only memory or a random-access memory or both. Elements of a computer can include a processor for performing instructions and one or more memory devices for storing instructions and data. A computer will also include, or is operatively coupled to receive data, transfer data or both, to/from one or more mass storage devices for storing data e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc. may embed a computer. Computer-readable media suitable for storing computer program instructions and data include all forms of non-volatile memory, media and memory devices, including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship with each other.

Embodiments of the present invention may comprise or utilize a special purpose or general purpose computer including computer hardware. Embodiments within the scope of the present invention may also include physical and other computer-readable media for carrying or storing computer-executable instructions and/or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and/or Digital Signal Processor (DSP) circuit) may embody the various electrical structures and methods.

In addition, a non-transitory machine-readable medium and/or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

As used herein, the term "network" refers to one or more data links that enable the transport of electronic data between computer systems and/or modules and/or other electronic devices. When a network or another communications connection (either hardwired, wireless, or a combination of hardwired or wireless) transfers or provides information to a computer, the computer properly views the connection as a transmission medium. A general purpose or special purpose computer access transmission media that can include a network and / or data links which carry desired program code in the form of computer-executable instructions or data structures. The scope of computer-readable media includes combinations of the above, that enable the transport of electronic data between computer systems and/or modules and/or other electronic devices.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and/or to less volatile computer-readable physical storage media at a computer system. Thus, computer system components that also (or even primarily) utilize transmission media may include computer-readable physical storage media.

Computer-executable instructions comprise, for example, instructions and data which cause a general purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and/or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and/or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and/or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multiprocessor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

The following terms and phrases, unless otherwise indicated, shall be understood to have the following meanings.

As used herein, the term "Cryptographic protocol" is also known as security protocol or encryption protocol. It is an abstract or concrete protocol that performs a security-related function and applies cryptographic methods often as sequences of cryptographic primitives. A protocol describes usage of algorithms. A sufficiently detailed protocol includes details about data structures and representations, to implement multiple, interoperable versions of a program.

Secure application-level data transport widely uses cryptographic protocols. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation.

Networking switches use cryptographic protocols, like Secure Socket Layer (SSL) and Transport Layer Security (TLS), the successor to SSL, to secure data communications over a wireless network.

As used herein, the term "Unauthorized access" is when someone gains access to a website, program, server, service, or other system using someone else's account or other methods. For example, if someone kept guessing a password or username for an account that was not theirs until they gained access, it is considered unauthorized access.

As used herein, the term "IoT" stands for Internet of Things which describes the network of physical objects "things" or objects embedded with sensors, software, and other technologies for the purpose of connecting and exchanging data with other devices and systems over the internet.

As used herein "Machine learning " refers to algorithms that give a computer the ability to learn without explicit programming, including algorithms that learn from and make predictions about data. Machine learning techniques include, but are not limited to, support vector machine, artificial neural network (ANN) (also referred to herein as a "neural net"), deep learning neural network, logistic regression, discriminant analysis, random forest, linear regression, rules-based machine learning, Naive Bayes, nearest neighbor, decision tree, decision tree learning, and hidden Markov, etc. For the purposes of clarity, part of a machine learning process can use algorithms such as linear regression or logistic regression. However, using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. The ANN may be featured with a feedback loop to adjust the system output dynamically as it learns from the new data as it becomes available. In machine learning, backpropagation and feedback loops are used to train the Artificial Intelligence/Machine Learning (AI/ML) model improving the model's accuracy and performance over time.

Statistical modeling relies on finding relationships between variables (e.g., mathematical equations) to predict an outcome.

As used herein, the term "Data mining" is a process used to turn raw data into useful information.

As used herein, the term "Data acquisition" is the process of sampling signals that measure real world physical conditions and converting the resulting samples into digital numeric values that a computer manipulates. Data acquisition systems typically convert analog waveforms into digital values for processing. The components of data acquisition systems include sensors to convert physical parameters to electrical signals, signal conditioning circuitry to convert sensor signals into a form that can be converted to digital values, and analog-to-digital converters to convert conditioned sensor signals to digital values. Stand-alone data acquisition systems are often called data loggers.

As used herein, the term "Dashboard" is a type of interface that visualizes particular Key Performance Indicators (KPIs) for a specific goal or process. It is based on data visualization and infographics.

As used herein, a "Database" is a collection of organized information so that it can be easily accessed, managed, and updated. Computer databases typically contain aggregations of data records or files.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is known as a datum. Data sets can also consist of a collection of documents or files.

As used herein, a "Sensor" is a device that measures physical input from its environment and converts it into data that is interpretable by either a human or a machine. Most sensors are electronic, which presents electronic data, but some are simpler, such as a glass thermometer, which presents visual data.

The term "infotainment system" or "in-vehicle infotainment system" (IVI) as used herein refers to a combination of vehicle systems which are used to deliver entertainment and information. In an example, the information may be delivered to the driver and the passengers of a vehicle/occupants through audio/ video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "environment" or "surrounding" as used herein refers to surroundings and the space in which a vehicle is navigating. It refers to dynamic surroundings in which a vehicle is navigating which includes other vehicles, obstacles, pedestrians, lane boundaries, traffic signs and signals, speed limits, potholes, snow, water logging etc.

The term "autonomous mode" as used herein refers to an operating mode which is independent and unsupervised.

The term "vehicle" as used herein refers to a thing used for transporting people or goods. Automobiles, cars, trucks, buses etc. are examples of vehicles.

The term "autonomous vehicle" also referred to as self-driving vehicle, driverless vehicle, robotic vehicle as used herein refers to a vehicle incorporating vehicular automation, that is, a ground vehicle that can sense its environment and move safely with little or no human input. Self-driving vehicles combine a variety of sensors to perceive their surroundings, such as thermographic cameras, Radio Detection and Ranging (RADAR), Light Detection and Ranging (LIDAR), Sound Navigation and Ranging (SONAR), Global Positioning System (GPS), odometry and inertial measurement unit. Control systems, designed for the purpose, interpret sensor information to identify appropriate navigation paths, as well as obstacles and relevant signage.

The term "communication module" or "communication system" as used herein refers to a system which enables the information exchange between two points. The process of transmission and reception of information is called communication. The elements of communication include but are not limited to a transmitter of information, channel or medium of communication and a receiver of information.

The term "autonomous communication" as used herein comprises communication over a period with minimal supervision under different scenarios and is not solely or completely based on pre-coded scenarios or pre-coded rules or a predefined protocol. Autonomous communication, in general, happens in an independent and an unsupervised manner. In an embodiment, a communication module is enabled for autonomous communication.

The term "connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networks. A channel is used for the information transfer of, for example, a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

The term "communication" as used herein refers to the transmission of information and/or data from one point to another. Communication may be by means of electromagnetic waves. Communication is also a flow of information from one point, known as the source, to another, the receiver. Communication comprises one of the following: transmitting data, instructions, information or a combination of data, instructions, and information. Communication happens between any two communication systems or communicating units. The term communication, herein, includes systems that combine other more specific types of communication, such as: V2I (Vehicle-to-Infrastructure), V2N (Vehicle-to-Network), V2V (Vehicle-to-Vehicle), V2P (Vehicle-to-Pedestrian), V2D (Vehicle-to-Device), V2G (Vehicle-to-Grid), and Vehicle-to-Everything (V2X) communication.

Further, the communication apparatus is configured on a computer with the communication function and is connected for bidirectional communication with the on-vehicle emergency report apparatus by a communication line through a radio station and a communication network such as a public telephone network or by satellite communication through a communication satellite. The communication apparatus is adapted to communicate, through the communication network, with communication terminals.

The term "Vehicle-to-Vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications) that can use the messages from surrounding vehicles to determine potential crash threats as they develop.

The term "Vehicle-to-Everything (V2X) communication" as used herein refers to transmission of information from a vehicle to any entity that may affect the vehicle, and vice versa. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.).

The term "protocol" as used herein refers to a procedure required to initiate and maintain communication; a formal set of conventions governing the format and relative timing of message exchange between two communications terminals; a set of conventions that govern the interactions of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications between communications terminals; a formal set of conventions governing the format and relative timing of message exchange between communications terminals; a set of semantic and syntactic rules that determine the behavior of functional units in achieving meaningful communication; a set of semantic and syntactic rules for exchanging information.

The term "communication protocol" as used herein refers to standardized communication between any two systems. An example communication protocol is a DSRC protocol. The DSRC protocol uses a specific frequency band (e.g., 5.9 GHz (Gigahertz)) and specific message formats (such as the Basic Safety Message, Signal Phase and Timing, and Roadside Alert ) to enable communications between vehicles and infrastructure components, such as traffic signals and roadside sensors. DSRC is a standardized protocol, and its specifications are maintained by various organizations, including the Institute of Electrical and Electronics Engineers (IEEE) and Society of Automotive Engineers (SAE) International.

The term "bidirectional communication" as used herein refers to an exchange of data between two components. In an example, the first component can be a vehicle and the second component can be an infrastructure that is enabled by a system of hardware, software, and firmware.

The term "alert" or "alert signal" refers to a communication to attract attention. An alert may include visual, tactile, audible alert, and a combination of these alerts to warn drivers or occupants. These alerts allow receivers, such as drivers or occupants, the ability to react and respond quickly.

The term "in communication with" as used herein, refers to any coupling, connection, or interaction using signals to exchange information, message, instruction, command, and/or data, using any system, hardware, software, protocol, or format regardless of whether the exchange occurs wirelessly or over a wired connection.

As used herein, the term "network" refers to one or more data links that enable the transport of electronic data between computer systems and/or modules and/or other electronic devices. When a network or another communications connection (either hardwired, wireless, or a combination of hardwired or wireless) transfers or provides information to a computer, the computer properly views the connection as a transmission medium. A general purpose or special purpose computer access transmission media that can include a network and / or data links which carry desired program code in the form of computer-executable instructions or data structures. The scope of computer-readable media includes combinations of the above, that enable the transport of electronic data between computer systems and/or modules and/or other electronic devices. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

The term "electronic control unit" (ECU), also known as an "electronic control module" (ECM), is usually a module that controls one or more subsystems. Herein, an ECU may be installed in a car or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be an embedded system in automotive electronics. In another example, the electronic control unit is wirelessly coupled with automotive electronics.

The terms "non-transitory computer-readable medium" and "computer-readable medium" include a single medium or multiple media such as a centralized or distributed database, and/or associated caches and servers that store one or more sets of instructions. Further, the terms "non-transitory computer-readable medium" and "computer-readable medium" include any tangible medium that is capable of storing, encoding, or carrying a set of instructions for execution by a processor that, for example, when executed, cause a system to perform any one or more of the methods or operations disclosed herein. As used herein, the term "computer readable medium" is expressly defined to include any type of computer readable storage device and/or storage disk and to exclude propagating signals.

The term "Vehicle Data bus" as used herein represents the interface to the vehicle data bus (e.g., Controller Area Network (CAN), Local Interconnect Network (LIN), Ethernet/IP, FlexRay, and Media Oriented Systems Transport (MOST)) that may enable communication between the Vehicle on-board equipment (OBE) and other vehicle systems to support connected vehicle applications.

The term, "handshaking" refers to an exchange of predetermined signals between agents connected by a communications channel to assure each that it is connected to the other (and not to an imposter). This may also include the use of passwords and codes by an operator. Handshaking signals are transmitted back and forth over a communications network to establish a valid connection between two stations. A hardware handshake uses dedicated wires such as the request-to-send (RTS) and clear-to-send (CTS) lines in an Recommended Standard 232 (RS-232) serial transmission. A software handshake sends codes such as "synchronize" (SYN) and "acknowledge" (ACK) in a Transmission Control Protocol/Internet Protocol (TCP/IP) transmission.

The term "computer vision module" or "computer vision system" allows the vehicle to "see" and interpret the world around it. This system uses a combination of cameras, sensors, and other technologies such as Radio Detection and Ranging (RADAR), Light Detection and Ranging (LIDAR), Sound Navigation and Ranging (SONAR), Global Positioning System (GPS), and Machine learning algorithms, etc. to collect visual data about the vehicle's surroundings and to analyze that data in real-time. The computer vision system is designed to perform a range of tasks, including object detection, lane detection, and pedestrian recognition. It uses deep learning algorithms and other machine learning techniques to analyze the visual data and make decisions about how to control the vehicle. For example, the computer vision system may use object detection algorithms to identify other vehicles, pedestrians, and obstacles in the vehicle's path. It can then use this information to calculate the vehicle's speed and direction, adjust its trajectory to avoid collisions, and apply the brakes or accelerate as needed. It allows the vehicle to navigate safely and efficiently in a variety of driving conditions.

As used herein, the term "driver" refers to such an occupant, even when that occupant is not actually driving the vehicle but is situated in the vehicle so as to be able to take over control and function as the driver of the vehicle when the vehicle control system hands over control to the occupant or driver or when the vehicle control system is not operating in an autonomous or semi-autonomous mode.

The term "host vehicle" as used herein refers to a vehicle that is observing the environment in order to decide based on observations.

The term "target vehicle" as used herein refers to a vehicle on which the host vehicle has a focus. The target vehicle may or may not be an autonomous vehicle. It may or may not have been enabled for Vehicle-to-Vehicle (V2V) communication.

The term "nearby vehicle" or "neighboring vehicle" or "surrounding vehicle" as used herein refers to a vehicle anywhere near to the host vehicle within a communication range of the host vehicle. It may or may not be an autonomous vehicle. It may or may not have been enabled for V2V communication. In some embodiments, a neighboring vehicle may more specifically refer to a vehicle that is immediately in the next lane or behind the host vehicle.

The term "road surface condition" as used herein refers to the physical state of the roadway, including its smoothness, texture, and friction. It can be affected by various factors such as weather, traffic volume, and maintenance practices. In an embodiment, it may be classified as dry, wet, snow-covered, or icy.

The term "safe distance" also known as the following distance, refers to the distance between a first vehicle and a second vehicle, wherein the second vehicle is in front of the first vehicle while driving. It is the space maintained between a first vehicle and a second vehicle, which is ahead of the first vehicle, to avoid collisions in case of sudden stops or emergencies. Maintaining a safe following distance can help prevent rear-end collisions and give enough time to react to any sudden changes in traffic conditions.

The term "uphill road" or "uphill road segment" refers to a road that has a rising gradient, which means that it slopes upwards as it extends further.

The term "visible roof area" as used herein refers to a roof area of the target vehicle that is detected by the host vehicle as it is visible from the viewpoint of the host vehicle.

The term "precipitation" includes rain, snow, sleet, hail, ice, and freezing rain.

The term "application server" refers to a server that hosts applications or software that delivers a business application through a communication protocol. An application server framework is a service layer model. It includes software components available to a software developer through an application programming interface. It is system software that resides between the operating system (OS) on one side, the external resources such as a database management system (DBMS), communications and Internet services on another side, and the users' applications on the third side.

The term "cyber security" as used herein refers to application of technologies, processes, and controls to protect systems, networks, programs, devices, and data from cyber-attacks.

The term "cyber security module" as used herein refers to a module comprising application of technologies, processes, and controls to protect systems, networks, programs, devices and data from cyber-attacks and threats. It aims to reduce the risk of cyber-attacks and protect against the unauthorized exploitation of systems, networks, and technologies. It includes, but is not limited to, critical infrastructure security, application security, network security, cloud security, Internet of Things (IoT) security.

The term "encrypt" used herein refers to securing digital data using one or more mathematical techniques, along with a password or "key" used to decrypt the information. It refers to converting information or data into a code, especially to prevent unauthorized access. It may also refer to concealing information or data by converting it into a code. It may also be referred to as cipher, code, encipher, encode. A simple example is representing alphabets with numbers - say, 'A' is '01', 'B' is '02', and so on. For example, a message like "HELLO" will be encrypted as "0805121215," and this value will be transmitted over the network to the recipient(s).

The term "decrypt" used herein refers to the process of converting an encrypted message back to its original format. It is generally a reverse process of encryption. It decodes the encrypted information so that only an authorized user can decrypt the data because decryption requires a secret key or password. This term could be used to describe a method of unencrypting the data manually or unencrypting the data using the proper codes or keys.

The term "cyber security threat" used herein refers to any possible malicious attack that seeks to unlawfully access data, disrupt digital operations, or damage information. A malicious act includes but is not limited to damaging data, stealing data, or disrupting digital life in general. Cyber threats include, but are not limited to, malware, spyware, phishing attacks, ransomware, zero-day exploits, trojans, advanced persistent threats, wiper attacks, data manipulation, data destruction, rogue software, malvertising, unpatched software, computer viruses, man-in-the-middle attacks, data breaches, Denial of Service (DoS) attacks, and other attack vectors.

The term "hash value" used herein can be thought of as fingerprints for files. The contents of a file are processed through a cryptographic algorithm, and a unique numerical value, the hash value, is produced that identifies the contents of the file. If the contents are modified in any way, the value of the hash will also change significantly. Example algorithms used to produce hash values: the Message Digest-5 (MD5) algorithm and Secure Hash Algorithm-1 (SHA1).

The term "integrity check" as used herein refers to the checking for accuracy and consistency of system related files, data, etc. It may be performed using checking tools that can detect whether any critical system files have been changed, thus enabling the system administrator to look for unauthorized alteration of the system. For example, data integrity corresponds to the quality of data in the databases and to the level by which users examine data quality, integrity, and reliability. Data integrity checks verify that the data in the database is accurate, and functions as expected within a given application.

The term "alarm" as used herein refers to a trigger when a component in a system or the system fails or does not perform as expected. The system may enter an alarm state when a certain event occurs. An alarm indication signal is a visual signal to indicate the alarm state. For example, when a cyber security threat is detected, a system administrator may be alerted via sound alarm, a message, a glowing LED, a pop-up window, etc. Alarm indication signal may be reported downstream from a detecting device, to prevent adverse situations or cascading effects.

The term "in communication with" as used herein, refers to any coupling, connection, or interaction using electrical signals to exchange information or data, using any system, hardware, software, protocol, or format, regardless of whether the exchange occurs wirelessly or over a wired connection.

As used herein, the term "cryptographic protocol" is also known as security protocol or encryption protocol. It is an abstract or concrete protocol that performs a security-related function and applies cryptographic methods often as sequences of cryptographic primitives. A protocol describes how the algorithms should be used. A sufficiently detailed protocol includes details about data structures and representations, at which point it can be used to implement multiple, interoperable versions of a program. Cryptographic protocols are widely used for secure application-level data transport. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

As used herein, the term "network" may include the Internet, a local area network, a wide area network, or combinations thereof. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. For example, the computer readable storage medium can be, but is not limited to, an electronic storage device, a magnetic storage device, an optical storage device, an electromagnetic storage device, a superconducting storage device, and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, does not construe transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein are downloadable to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA), and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. Each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter described herein is in the general context of computer-executable instructions of a computer program product that runs on a computer and/or computers, those skilled in the art will recognize that the one or more embodiments herein also can be implemented in combination with one or more other program modules. Program modules include routines, programs, components, data structures, and/or the like that perform particular tasks and/or implement particular abstract data types. Moreover, other computer system configurations, including single-processor and/or multiprocessor computer systems, mini-computing devices, mainframe computers, as well as computers, hand-held computing devices (e.g., PDA, phone), microprocessor-based or programmable consumer and/or industrial electronics and/or the like can practice the herein described computer-implemented methods. Distributed computing environments, in which remote processing devices linked through a communications network perform tasks, can also practice the illustrated aspects. However, stand-alone computers can practice one or more, if not all aspects of the one or more embodiments described herein. In a distributed computing environment, program modules can be located in both local and remote memory storage devices.

As used in this application, the terms "component," "system," "platform," "interface," and/or the like, can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

As it is employed in the subject specification, the term "processor" can refer to any computing processing unit and/or device comprising, but not limited to, single-core processors; single-processors with software multithread execution capability; multi-core processors; multi-core processors with software multithread execution capability; multi-core processors with hardware multithread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular based transistors, switches and/or gates, in order to optimize space usage and/or to enhance performance of related equipment. A combination of computing processing units can implement a processor.

Herein, terms such as "store," "storage," "data store," data storage," "database," and any other information storage component relevant to operation and functionality of a component refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, and/or nonvolatile random access memory (RAM) (e.g., ferroelectric RAM (FeRAM). Volatile memory can include RAM, which can function as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synch link DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein include, without being limited to including, these and/or any other suitable types of memory.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" as "comprising" is interpreted when employed as a transitional word in a claim.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and/or technical improvement over technologies found in the marketplace, and/or to enable others of ordinary skill in the art to understand the embodiments described herein.

Driving on icy uphill roads can be challenging and dangerous, as it can cause the vehicle to lose traction and slide uncontrollably. Some of the problems that can arise when driving on icy uphill roads (i) Icy roads reduce the amount of traction between the tires and the road surface, making it difficult to gain enough traction to climb the hill. (ii) sliding of the vehicle if it loses traction. It can slide backward or sideways, increasing the risk of an accident, (iii) When driving uphill on an icy road, the engine may struggle to maintain power and stall, making it difficult to continue the ascent. (iv) Icy roads can significantly increase the distance required to stop the vehicle. If the driver needs to brake suddenly while driving uphill, they may not be able to stop the vehicle in time to avoid an accident, (v) Ice, snow, and fog can significantly reduce visibility, making it challenging to see the road and other vehicles. To minimize these problems, it is essential that the autonomous vehicle detects these issues with icy roads and avoid a possible collision incident by taking collision avoidance action. It may include adjusting driving behavior, alert on proper winter tires, and avoiding or maintaining proper safe distance when driving on steep icy uphill roads when possible.

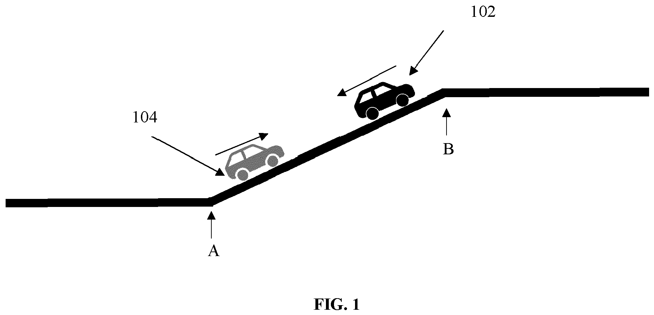

FIG. 1 shows a scenario when vehicles travel on an uphill road in icy conditions according to an embodiment. To avoid accidents and icy roads, as a first step, in the vehicle routing, it is determined how many icy roads and how many icy roads that are uphill will be encountered. Once the determination is made, and the vehicle is already on the icy road itself, automatically detect that the vehicle 102 at the top may be sliding backwards and provide room for vehicle 104, get a warning way ahead of time in the vehicle 104 before the vehicle 102 starts to come down. In an embodiment, the system avoids accidents on an icy day, and more particularly in the areas where there is an uphill road.

In an embodiment, the system/ method finds potential situations where there is a risk of having an accident when two vehicles 102 and 104 are on a tilted road and because of the type of weather conditions, such as ice, sleet, snow. The vehicle 102 in front of the vehicle 104 may lose some traction in the wheels, and therefore go backwards and may hit the vehicle 104.

Whenever vehicles travel on icy roads, for example in European and US countries where there can be a lot of snow or ice, the icy roads will cause the vehicle to start to slide. As shown in FIG. 1, when both vehicles 102 and 104 are going up, on an uphill road, there is a certain amount of safe distance that needs to be maintained.

In an embodiment, if vehicle 104 is riding on an icy road, then the safe distance is going to be automatically modified to a higher value than that of a normal road/ normal day, by the vehicle control system. If the vehicle is riding on an uphill road in an icy condition from point A to B, then the safe distance is further modified to a higher value. In an embodiment, in addition to automatically modifying the safe distance, additional warnings / alert messages are issued on the infotainment system on the vehicle 104 to attain the attention of the vehicle driver or rider.

Even after the safe distance, vehicle 104 observes that vehicle 102, which is ahead of vehicle 104, is losing traction, vehicle 104 will provide warnings and may adjust the safe distance further. For example, if the safe distance is 20 feet on a normal day, then on an icy road it may be set to 30 feet, and on an icy uphill road it may further be set to 40 feet. In an embodiment, the vehicle sounds a warning if the safe distance is not maintained. In an embodiment, a warning is provided in vehicle 104 when vehicle 102, which is ahead of vehicle 104, starts to slide down. In an embodiment, detecting icy roads, icy uphill roads, a vehicle 102 ahead of the host vehicle 104 and vehicle 104 make decisions to avoid an accident, vehicle 104 may be an autonomous vehicle.

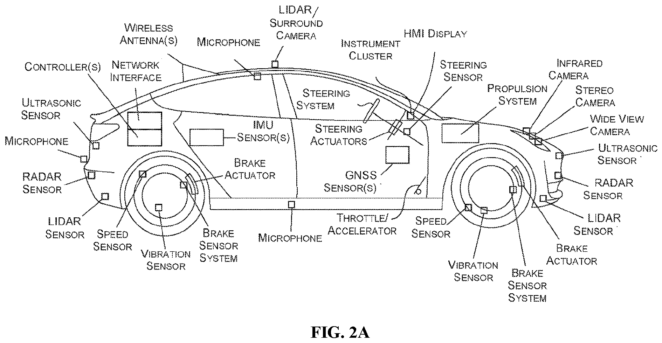

FIG. 2A is an illustration of an example autonomous vehicle with various sensors, actuators, and systems according to an embodiment. The Autonomous system comprises various sensors, such as ultrasonic sensor, lidar sensors, radar sensors, etc., actuators such as brake actuator, steering actuators, etc., and various subsystems such as propulsion system, steering system, brake sensor system, communication system, etc. FIG. 1 is depicted as an example system; neither is it limited by the systems depicted nor is it an exhaustive list of the sensors, actuators, and systems/sub-systems, and/or features of the autonomous vehicle. Further, the vehicle shown should not be construed as limiting in terms of the arrangement of any of the sensors, actuators, and systems/sub-systems depicted. These sensors, actuators, and systems/sub-systems can be arranged as suited for a purpose to be performed by the autonomous vehicle. Autonomous vehicles, also known as self-driving vehicles or driverless vehicles, are vehicles that can navigate and operate without human intervention. Sensors, for example, including cameras, lidars, radars, and ultrasonic sensors, enable autonomous vehicles to detect and recognize objects, obstacles, and pedestrians on the road. Autonomous vehicles use advanced control systems to make real-time decisions based on sensor data and pre-programmed rules or intelligence-based decision systems. These systems control, for example, acceleration, braking, steering, and communication of the vehicle. Navigation systems such as GPS, maps, and other location-based technologies help autonomous vehicles navigate and plan the optimal route to a destination. Communication systems of autonomous vehicles help them communicate with other vehicles and infrastructure, such as traffic lights and road signs, to exchange information and optimize traffic flow. Autonomous vehicles have several safety features, including collision avoidance systems, emergency braking, and backup systems in case of system failures. Autonomous vehicles are assisted by artificial intelligence and machine learning algorithms to analyze data, recognize patterns, and improve performance over time.

In an embodiment, radars and lidars detect that the vehicle 102 is starting to go backwards and approaching the vehicle 104. While the vehicle 104 may be standing still, or is moving forward, the vehicle 102 which is in front of the vehicle 104 is closing the distance.

In an embodiment, the vehicle 102, starts sending out signals. These signals may be, "Vehicle sliding, because of an icy road"; "Vehicle wheels are not moving"; "Vehicle is not having forward momentum"; "Vehicle is getting reverse momentum". These signals warn all the other vehicles around it about the current situation or state of vehicle 102. Surrounding vehicles or nearby vehicles may then keep a greater safe distance between their vehicle and the vehicle 102 greater than the normal safe distance.

In an embodiment, once the host vehicle determines that there are icy roads in the path, it provides an early warning that the vehicle is not suitable to drive on the icy roads because the tire treads are not up to the requirement for the environment, i.e., icy conditions, surrounding the vehicle. In an embodiment, the host vehicle makes the adjustments to the safe distance to avoid the accident/collision.

In an embodiment, the autonomous vehicle is avoiding accidents based on other vehicles and other situations.

In an embodiment, the host vehicle would avoid the icy route and generate an alternate route for a destination. But once the host vehicle is on the road, the safe distance for an icy day, safe distance being the distance between the host vehicle and the other vehicle before warning comes, is increased from that of a normal road surface condition. If the host vehicle is going on an uphill road in an icy condition, the safe distance is further increased. In an embodiment the increase may be 2 times to 5 times the safe distance maintained during the dry road surface conditions. If the distance between the vehicle in front of the host vehicle, and the host is starting to close in, because the vehicle in front of the host vehicle is losing traction and sliding down, then the host vehicle would provide an early warning and warns the host vehicle driver/system not to go forward. In an embodiment, the control system of the host vehicle, may suggest a corrective action (a collision avoidance action) to the driver of the host vehicle or take an autonomous action, to go backwards (reverse) or move over to the side and let the vehicle that is sliding down go without impacting the host vehicle.

In an embodiment, the host vehicle will track the number of lanes available, traffic nearby, vehicles behind it, vehicles next to it before deciding/ suggesting the corrective action.

When the host vehicle sensor senses an icy uphill road and detects that a target vehicle is sliding or predicts that the target vehicle is going to slide, the host vehicle system generates a warning. At this point the host vehicle must sense its surrounding environment, vehicles next to it, vehicles behind it, number of lanes, etc. Based on the sensed surroundings, the host vehicle will decide whether to move to a side lane, go reverse, stop at the same place, or keep going forward. In an embodiment, the host vehicle will send communication signals/ broadcast a message to the vehicles that are around it, so that the vehicles around the host vehicle can start taking corrective actions.

In an embodiment, the host vehicle will take corrective actions by itself to avoid the accident. In another embodiment, the host vehicle will provide information to other vehicles so that the host vehicle and the other vehicles can avoid collision. In an embodiment, if the host vehicle itself is losing traction or slipping backwards, it is going to provide the warning signal and broadcast the message to the surrounding vehicles. In an embodiment, the host vehicle determines how many vehicles are near it and then starts sending signals by making the connections with the other vehicles.

In an embodiment, when the host vehicle is giving the signals to the other vehicles, that it must move right or it is sliding down, then the vehicles which are around the host vehicle will move in coordinated ways by giving way to the host vehicle and avoiding a collision with the host vehicle. In an embodiment, the other vehicles accept the host vehicle instruction, and they all move in a coordinated way to avoid the collision. In an embodiment, it will be a coordinated collision avoidance system.

In an embodiment, the vehicle that is sliding down has no control, it can go in any direction, going down, going sideways, etc. The vehicle may not be able to control anything, but other vehicles that are seeing the vehicle have some opportunity and can start taking actions to avoid any collision. The vehicle that is sliding down must establish communication with other vehicles on a constant basis.

In an embodiment, the communication signals have priority over other things in such scenarios for the vehicles when there is a situation of predicted or imminent collision. For example, on a very steep but very short distance uphill, the host vehicle is following another vehicle and another vehicle starts sliding, then the sensitivity of the sensors of the host vehicle has to increase. The signaling taking place when there is an imminent or predicted collision has priority, meaning all the resources make sure that the processing is done, at the highest way, so that getting information is as fast as possible with least amount of latency. All the sensors are heightened, so that the vehicle is going to have to make that decision whether it can move to the right, left or backwards depending on the vehicles that are around it. In an example, if there is a vehicle behind, and a vehicle next to the host vehicle, then the host vehicle can only potentially send more signals to the other vehicles to take corrective actions, like maybe force them to move to a vacant space to create a space for the host vehicle.

In an embodiment, the host vehicle might be ready for a collision from other vehicles rather than the host vehicle being responsible for colliding with another vehicle. In an embodiment, the host vehicle decides on various corrective actions when the host vehicle or other vehicles around it start to slide and there is a possibility of collision. Such corrective actions include a steering angle, a braking profile, a lane change, a speed profile and to execute the maneuver automatically and autonomously. In an embodiment, it may assist the driver in taking the corrective action.

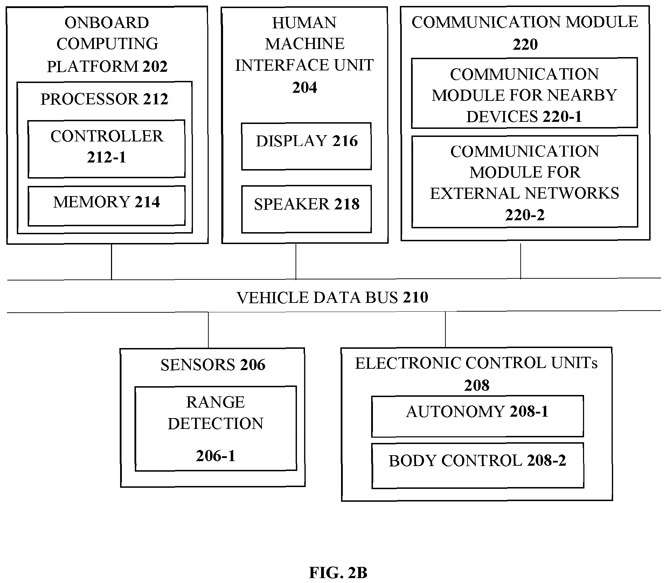

FIG. 2B shows a block diagram of electronic components of a vehicle according to an embodiment. In the illustrated example, the electronic components include an onboard computing platform 202, a human-machine interface (HMI) unit 204, the communication module 220, sensors 206, electronic control units (ECUs) 208, and a vehicle data bus 210. FIG. 2B illustrates an example architecture of some of the electronic components as displayed in FIG. 2A.

The onboard computing platform 202 includes a processor 212 (also referred to as a microcontroller unit or a controller) and memory 214. In the illustrated example, processor 212 of the onboard computing platform 202 is structured to include the controller 212-1. In other examples, the controller 212-1 is incorporated into another ECU with its own processor and memory. The processor 212 may be any suitable processing device or set of processing devices such as, but not limited to, a microprocessor, a microcontroller-based platform, an integrated circuit, one or more field programmable gate arrays (FPGAs), and/or one or more application-specific integrated circuits (ASICs). The memory 214 may be volatile memory (e.g., RAM including non-volatile RAM, magnetic RAM, ferroelectric RAM, etc.), non-volatile memory (e.g., disk memory, FLASH memory, EPROMs, EEPROMs, memristor-based non-volatile solid-state memory, etc.), unalterable memory (e.g., EPROMs), read-only memory, and/or high-capacity storage devices (e.g., hard drives, solid state drives, etc.). In some examples, memory 214 includes multiple kinds of memory, particularly volatile memory, and non-volatile memory. Memory 214 is computer readable media on which one or more sets of instructions, such as the software for operating the methods of the present disclosure, can be embedded. The instructions may embody one or more of the methods or logic as described herein. For example, the instructions reside completely, or at least partially, within any one or more of the memory 214, the computer readable medium, and/or within the processor 212 during execution of the instructions.

The HMI unit 204 provides an interface between the vehicle and a user. The HMI unit 204 includes digital and/or analog interfaces (e.g., input devices and output devices) to receive input from, and display information for, the user(s). The input devices include, for example, a control knob, an instrument panel, a digital camera for image capture and/or visual command recognition, a touch screen, an audio input device (e.g., cabin microphone), buttons, or a touchpad. The output devices may include instrument cluster outputs (e.g., dials, lighting devices), haptic devices, actuators, a display 216 (e.g., a heads-up display, a center console display such as a liquid crystal display (LCD), an organic light emitting diode (OLED) display, a flat panel display, a solid state display, etc.), and/or a speaker 218. For example, the display 216, the speaker 218, and/or other output device(s) of the HMI unit 204 are configured to emit an alert, such as an alert to request manual takeover, to an operator (e.g., a driver) of the vehicle. Further, the HMI unit 204 of the illustrated example includes hardware (e.g., a processor or controller, memory, storage, etc.) and software (e.g., an operating system, etc.) for an infotainment system that is presented via display 216.

Sensors 206 are arranged in and/or around the vehicle to monitor properties of the vehicle and/or an environment in which the vehicle is located. One or more of the sensors 206 may be mounted to measure properties around an exterior of the vehicle. Additionally, or alternatively, one or more of sensors 206 may be mounted inside a cabin of the vehicle or in a body of the vehicle (e.g., an engine compartment, wheel wells, etc.) to measure properties of the vehicle and/or interior of the vehicle. For example, the sensors 206 include accelerometers, odometers, tachometers, pitch and yaw sensors, wheel speed sensors, microphones, tire pressure sensors, biometric sensors, ultrasonic sensors, infrared sensors, Light Detection and Ranging (lidar), Radio Detection and Ranging System (radar), Global Positioning System (GPS), cameras and/or sensors of any other suitable type. In the illustrated example, sensors 206 include the range-detection sensors that are configured to monitor object(s) located within a surrounding area of the vehicle.

The ECUs 208 monitor and control the subsystems of the vehicle. For example, the ECUs 208 are discrete sets of electronics that include their own circuit(s) (e.g., integrated circuits, microprocessors, memory, storage, etc.) and firmware, sensors, actuators, and/or mounting hardware. The ECUs 208 communicate and exchange information via a vehicle data bus (e.g., the vehicle data bus 210). Additionally, the ECUs 208 may communicate properties (e.g., status of the ECUs, sensor readings, control state, error, and diagnostic codes, etc.) and/or receive requests from each other. For example, the vehicle may have dozens of the ECUs that are positioned in various locations around the vehicle and are communicatively coupled by the vehicle data bus 210.

In the illustrated example, the ECUs 208 include the autonomy unit 208-1 and a body control module 208-2. For example, the autonomy unit 208-1 is configured to perform autonomous and/or semi-autonomous driving maneuvers (e.g., defensive driving maneuvers) of the vehicle based upon, at least in part, instructions received from the controller 212-1 and/or data collected by the sensors 206 (e.g., range-detection sensors). Further, the body control module 208-2 controls one or more subsystems throughout the vehicle, such as power windows, power locks, an immobilizer system, power mirrors, etc. For example, the body control module 208-2 includes circuits that drive one or more relays (e.g., to control wiper fluid, etc.), brushed direct current (DC) motors (e.g., to control power seats, power locks, power windows, wipers, etc.), stepper motors, LEDs, safety systems (e.g., seatbelt pretensioner, air bags, etc.), etc.

The vehicle data bus 210 communicatively couples the communication module 220, the onboard computing platform 202, the HMI unit 204, the sensors 206, and the ECUs 208. In some examples, the vehicle data bus 210 includes one or more data buses. The vehicle data bus 210 may be implemented in accordance with a controller area network (CAN) bus protocol as defined by International Standards Organization (ISO) 11898-1, a Media Oriented Systems Transport (MOST) bus protocol, a CAN flexible data (CAN-FD) bus protocol (ISO 11898-7) and/a K-line bus protocol (ISO 9141 and ISO 14230-1), and/or an Ethernet^{™} bus protocol IEEE 802.3 (2002 onwards), etc.

The communication module 220-1 is configured to communicate with other nearby communication devices. In the illustrated example, communication module 220 includes a dedicated short-range communication (DSRC) module. A DSRC module includes antenna(s), radio(s) and software to communicate with nearby vehicle(s) via vehicle-to-vehicle (V2V) communication, infrastructure-based module(s) via vehicle-to-infrastructure (V2I) communication, and/or, more generally, nearby communication device(s) (e.g., a mobile device-based module) via vehicle-to-everything (V2X) communication.

V2V communication allows vehicles to share information such as speed, position, direction, and other relevant data, enabling them to cooperate and coordinate their actions to improve safety, efficiency, and mobility on the road. V2V communication can be used to support a variety of applications, such as collision avoidance, lane change assistance, platooning, and traffic management. It may rely on dedicated short-range communication (DSRC) and other wireless protocols that enable fast and reliable data transmission between vehicles. V2V communication, which is a form of wireless communication between vehicles that allows vehicles to exchange information and coordinate with other vehicles on the road. V2V communication enables vehicles to share data about their location, speed, direction, acceleration, and braking with other nearby vehicles, which can help improve safety, reduce congestion, and enhance the efficiency of transportation systems.

V2V communication is typically based on wireless communication protocols such as Dedicated Short-Range Communications (DSRC) or Cellular Vehicle-to-Everything (C-V2X) technology. With V2V communication, vehicles can receive information about potential hazards, such as accidents or road closures, and adjust their behavior accordingly. V2V communication can also be used to support advanced driver assistance systems (ADAS) and automated driving technologies, such as platooning, where a group of vehicles travel closely together using V2V communication to coordinate their movements.

More information on the DSRC network and how the network may communicate with vehicle hardware and software is available in the U.S. Department of Transportation's Core June 2011 System Requirements Specification (SyRS) report (available at http://wwwits.dot.gov/meetings/pdf/Core SystemSESyRSRevA%20(2011-06-13).pdf). DSRC systems may be installed on vehicles and along roadsides on infrastructure. DSRC systems incorporating infrastructure information are known as a "roadside" system. DSRC may be combined with other technologies, such as Global Position System (GPS), Visual Light Communications (VLC), Cellular Communications, and short range radar, facilitating the vehicles communicating their position, speed, heading, relative position to other objects and to exchange information with other vehicles or external computer systems. DSRC systems can be integrated with other systems such as mobile phones.

Currently, the DSRC network is identified under the DSRC abbreviation or name. However, other names are sometimes used, usually related to a Connected Vehicle program or the like. Most of these systems are either pure DSRC or a variation of the IEEE 802.11 wireless standard. However, besides the pure DSRC system it is also meant to cover dedicated wireless communication systems between vehicles and roadside infrastructure systems, which are integrated with GPS and are based on an IEEE 802.11 protocol for wireless local area networks (such as 802. 11p, etc.).

Additionally, or alternatively, the communication module 220-2 includes a cellular vehicle-to-everything (C-V2X) module. A C-V2X module includes hardware and software to communicate with other vehicle(s) via V2V communication, infrastructure-based module(s) via V2I communication, and/or, more generally, nearby communication devices (e.g., mobile device-based modules) via V2X communication. For example, a C-V2X module is configured to communicate with nearby devices (e.g., vehicles, roadside units, mobile devices, etc.) directly and/or via cellular networks. Currently, standards related to C-V2X communication are being developed by the 3rd Generation Partnership Project.

Further, the communication module 220-2 is configured to communicate with external networks. For example, the communication module 220-2 includes hardware (e.g., processors, memory, storage, antenna, etc.) and software to control wired or wireless network interfaces. In the illustrated example, the communication module 220-2 includes one or more communication controllers for cellular networks (e.g., Global System for Mobile Communications (GSM), Universal Mobile Telecommunications System (UMTS), Long Term Evolution (LTE), Code Division Multiple Access (CDMA)), Near Field Communication (NFC) and/or other standards-based networks (e.g., WiMAX (IEEE 802.16m), local area wireless network (including IEEE 802.11 a/b/g/n/ac or others), Wireless Gigabit (IEEE 802.11ad), etc.). In some examples, the communication module 220-2 includes a wired or wireless interface (e.g., an auxiliary port, a Universal Serial Bus (USB) port, a Bluetooth^{®} wireless node, etc.) to communicatively couple with a mobile device (e.g., a smart phone, a wearable, a smart watch, a tablet, etc.). In such examples, the vehicle may communicate with the external network via the coupled mobile device. The external network(s) may be a public network, such as the Internet; a private network, such as an intranet; or combinations thereof, and may utilize a variety of networking protocols now available or later developed including, but not limited to, TCP/IP-based networking protocols.

In an embodiment of the system, the host vehicle updates the boundary for the impact zone in real-time as the target vehicle starts moving.

In an embodiment of the system, the communication between the host vehicle and the target vehicle is via Vehicle-to-Vehicle (V2V) communication. In an embodiment of the system, the Vehicle-to-Vehicle (V2V) communication is based on wireless communication protocols using at least one of a Dedicated Short-Range Communications (DSRC), and a Cellular Vehicle-to-Everything (C-V2X) technology. In an embodiment of the system, the communication between the host vehicle and the target vehicle is via an internet connection.

In an embodiment, the communication module is enabled for an autonomous communication, wherein the autonomous communication comprises communication over a period with minimal supervision under different scenarios. The communication module comprises a hardware component comprising, a vehicle gateway system comprising a microcontroller, a transceiver, a power management integrated circuit, an Internet of Things device capable of transmitting one of an analog and a digital signal over one of a telephone, a communication, either wired or wirelessly.

The autonomy unit 208-1 of the illustrated example is configured to perform autonomous and/or semi-autonomous driving maneuvers, such as defensive driving maneuvers, for the vehicle. For example, the autonomy unit 208-1 performs the autonomous and/or semi-autonomous driving maneuvers based on data collected by the sensors 206. In some examples, the autonomy unit 208-1 is configured to operate a fully autonomous system, a park-assist system, an advanced driver-assistance system (ADAS), and/or other autonomous system(s) for the vehicle.

An ADAS is configured to assist a driver in safely operating the vehicle. For example, the ADAS is configured to perform adaptive cruise control, collision avoidance, lane-assist (e.g., lane centering), blind-spot detection, rear-collision warning(s), lane departure warnings and/or any other function(s) that assist the driver in operating the vehicle. To perform the driver-assistance features, the ADAS monitors objects (e.g., vehicles, pedestrians, traffic signals, etc.) and develops situational awareness around the vehicle. For example, the ADAS utilizes data collected by the sensors 206, the communication module 220-1 (e.g., from other vehicles, from roadside units, etc.), the communication module 220-2 from a remote server, and/or other sources to monitor the nearby objects and develop situational awareness.

Further, in the illustrated example, controller (or control module) 212-1 is configured to monitor an ambient environment of the vehicle. For example, to enable the autonomy unit 208-1 to perform autonomous and/or semi-autonomous driving maneuvers, the controller 212-1 collects data that is collected by the sensors 206 of the vehicle. In some examples, the controller 212-1 collects location-based data via the communication module 220-1 and/or another module (e.g., a GPS receiver) to facilitate the autonomy unit 208-1 in performing autonomous and/or semi-autonomous driving maneuvers. Additionally, the controller 212-1 collects data from (i) adjacent vehicle(s) via the communication module 220-1 and V2V communication and/or (ii) roadside unit(s) via the communication module 220-1 and V2I communication to further facilitate the autonomy unit 208-1 in performing autonomous and/or semi-autonomous driving maneuvers.

In operation, according to an embodiment, the communication module 220-1 performs V2V communication with an adjacent vehicle. For example, the communication module 220-1 collects data from the adjacent vehicle that identifies (i) whether the adjacent vehicle includes an autonomous and/or semi-autonomous system (e.g., ADAS), (ii) whether the autonomous and/or semi-autonomous system is active, (iii) whether a manual takeover request of the autonomous and/or semi-autonomous system has been issued, (iv) lane-detection information of the adjacent vehicle, (v) a speed and/or acceleration of the adjacent vehicle, (vi) a (relative) position of the adjacent vehicle, (vii) a direction-of-travel of the adjacent vehicle, (viii) a steering angle rate-of-change of the adjacent vehicle, (ix) dimensions of the adjacent vehicle, (x) whether the adjacent vehicle is utilizing stability control system(s) (e.g., anti-lock braking, traction control, electronic stability control, etc.), and/or any other information that facilitates the controller 212-1 in monitoring the adjacent vehicle.

Based at least partially on the data that the communication module 220-1 collects from the adjacent vehicle via V2V communication, the controller 212-1 can determine a collision probability for the adjacent vehicle. For example, the controller 212-1 determines a collision probability for the adjacent vehicle in response to identifying a manual takeover request within the data collected by the communication module 220-1 from the adjacent vehicle. Additionally, or alternatively, the controller 212-1 determines a collision probability for the adjacent vehicle in response to identifying a discrepancy between (i) lane-marker locations determined by the controller 212-1 of the vehicle based on the sensors 206 and (ii) lane-marker location determined by the adjacent vehicle. Further, in some examples, the controller 212-1 determines the collision probability for the adjacent vehicle based on data collected from other sources, such as the sensors 206, e.g., range detector sensors 206-1 and/or other sensor(s) of the vehicle, roadside unit(s) in communication with the communication module 220-1 via V2I communication, and/or remote server(s) in communication with the communication module 220-1. For example, controller 212-1 determines the collision probability for the adjacent vehicle upon determining, based on data collected by the sensors of the vehicle and the adjacent vehicle, that the adjacent vehicle has not detected a nearby object.

In some examples, controller 212-1 determines the collision probability based on a takeover time for the adjacent vehicle and/or a time-to-collision of the adjacent vehicle. For example, the takeover time corresponds with a duration of time between (1) the adjacent vehicle emitting a request for a manual takeover to be performed and (2) an operator of the adjacent vehicle manually taking over control of the adjacent vehicle. The controller 212-1 is configured to determine the takeover time of the adjacent vehicle based on measured characteristics of the adjacent vehicle (e.g., velocity, acceleration, dimensions, etc.), the operator of the adjacent vehicle (e.g., a measured reaction time, etc.), and/or an environment of the adjacent vehicle (e.g., road conditions, weather conditions, etc.). Further, the time-to-collision corresponds with the time it would take for the adjacent vehicle to collide with another vehicle (e.g., a third vehicle) and/or object (e.g., a guardrail, a highway lane divider, etc.) if the current conditions were maintained.

Additionally, or alternatively, the controller 212-1 is configured to determine the time-to-collision of the adjacent vehicle based on a velocity, an acceleration, a direction-of-travel, a distance to the object, a required steering angle to avoid the object, a steering angle rate-of-change, and/or other measured characteristics of the adjacent vehicle that the communication module 220-1 collects from the adjacent vehicle via V2V communication. Further, controller 212-1 is configured to determine a collision probability for the vehicle based on the collision probability of the adjacent vehicle.

Upon determining the collision probability of the adjacent vehicle and determining that the collision probability is not as per threshold, the autonomy unit 208-1 autonomously performs (e.g., for the ADAS) a defensive driving maneuver to prevent the vehicle from being involved in a collision caused by the adjacent vehicle. For example, the autonomous defensive driving maneuver includes deceleration, emergency braking, changing of lanes, changing of position within a current lane of travel, etc. In some examples, the autonomy unit 208-1 is configured to initiate the defensive driving maneuver before the takeover time of the adjacent vehicle has been completed. That is, the controller 212-1 is configured to cause the autonomy unit 208-1 to perform the defensive driving maneuver before the operator of the adjacent vehicle manually takes over control of the adjacent vehicle. Further, in some examples, the controller 212-1 emits an audio, visual, haptic, and/or other alert (e.g., via an HMI unit 204) for the operator of the vehicle to request manual takeover in response to determining that the collision probability is less than the first threshold and greater than the second threshold. By emitting such an alert, controller 212-1 enables the operator of the vehicle to safely take control of the vehicle before the adjacent vehicle is potentially involved in a collision. Additionally, or alternatively, the controller 212-1 is configured to perform other defensive measures (e.g., prefilling brake fluid lines) in response to determining that the collision probability is greater than a threshold (e.g., the second threshold, a third threshold).

The communication module enables in-vehicle communication, communication with other vehicles, infrastructure communication, grid communication, etc., using Vehicle to network (V2N), Vehicle to infrastructure (V2I), Vehicle to vehicle (V2V), Vehicle to cloud (V2C), Vehicle to pedestrian (V2P), Vehicle to device (V2D), Vehicle to grid (V2G) communication systems. Then, the system notifies nearby or surrounding vehicles or vehicles communicating with the vehicle's communication module. The vehicle uses, for example, a message protocol, a message that goes to the other vehicles via a broadcast.

In an embodiment, a connection is established between a vehicle and a nearby vehicle, which is a surrounding car. A nearby vehicle is detected by the vehicle control system. The nearby vehicle is detected by exchanging handshaking signals. Handshaking is the automated process for negotiation of setting up a communication channel between entities. The processor sends a start signal through the communication channel in order to detect a nearby vehicle. If there is a nearby vehicle, the processor may receive an acknowledgement signal from the nearby vehicle. Upon receiving the acknowledgement signal, the processor establishes a secured connection with the nearby vehicle. The processor may receive a signal at the communication module from the nearby vehicle. The processor may further automatically determine the origin of the signal. The processor communicatively connects the communication module to the nearby vehicle. Then the processor is configured to send and/or receive a message to and/or from the nearby vehicle. The signals received by the communication module may be analyzed to identify the origin of the signal to determine the location of the nearby vehicle.

In an embodiment, the system is enabled for bidirectional communication. The system sends a signal and then receives a signal/communication. In an embodiment, the communication could be a permission for access to control the other vehicle. In another embodiment, the communication could be an incremental control communication, for example, an initial control of the speed up to 10 miles per hour, then further additional 10 miles per hour, and so on.

As a first step of the method according to the disclosure, a data link between the vehicle and nearby vehicle or any other external device is set up in order to permit data to be exchanged between the vehicle and the nearby vehicle or any other external device in the form of a bidirectional communication. This can take place, for example, via a radio link or a data cable. It is therefore possible for the nearby vehicle or any other external device to receive data from the vehicle or for the vehicle to request data from the nearby vehicle or any other external device.

In an embodiment, bidirectional communication comprises the means for data acquisition and are designed to exchange data bidirectionally with one another. In addition, at least the vehicle comprises the logical means for gathering the data and arranging it to a certain protocol based on the receiving entity's protocol.

Initially, a data link for bidirectional communication is set up. The vehicle and the nearby vehicle or any other external device can communicate with one another via this data link and therefore request or exchange data, wherein the data link can be implemented, for example, as a cable link or radio link.

Bidirectional communication has various advantages as described herein. In various embodiments, data is communicated and transferred at a suitable interval, including, for example, 200 millisecond (ms) intervals, 100 ms intervals, 50 ms intervals, 20 ms intervals, 10 ms intervals, or even more frequent and/or in real-time or near real-time, in order to allow a vehicle to respond to, or otherwise react to, data. Bidirectional IR communication may be used to facilitate data exchange.

The apparatus for the vehicle according to the embodiment that performs bidirectional communication may be by means of a personal area network (PAN) modem. Therefore, a user can have access to an external device using the vehicle information terminal, and can then store, move, and delete the user's desired data.

In an embodiment, the vehicle may transmit a message via a communication link. It can be using any combination of vehicle to vehicle (V2V), vehicle to everything (V2X) or vehicle to infrastructure (V2I) type of communication. In an embodiment, it uses vehicle-to-vehicle (V2V) communication that enables vehicles to wirelessly exchange information (communicate), for example, about their speed, location, and heading.

In an embodiment, messaging protocols comprise of at least one of Advanced Message Queuing Protocol (AMQP), Message Queuing Telemetry Transport (MQTT), Simple (or Streaming) Text Oriented Message Protocol (STOMP), MQTT-S (and is an extension of the open publish/subscribe MQTT), which are heavily used in IoT based technologies and edge networks.

In an embodiment of the system, the host vehicle is operable to establish a communication via a communication module with the target vehicle to obtain information on a state of the target vehicle, wherein the state comprises the change in speed of the target vehicle and an uphill road inclination. In an embodiment of the system, the uphill road inclination is obtained using a longitudinal accelerometer sensor, a GPS, an Inertial Measurement Unit (IMU), a lidar, a radar, and a camera.

In an embodiment of the system, the communication between the host vehicle and the target vehicle is via Vehicle-to-Vehicle (V2V) communication. In an embodiment of the system, V2V communication is based on wireless communication protocols using at least one of a Dedicated Short-Range Communications (DSRC), and a Cellular Vehicle-to-Everything (C-V2X) technology. In an embodiment of the system, the communication between the host vehicle and the target vehicle is via an internet connection.

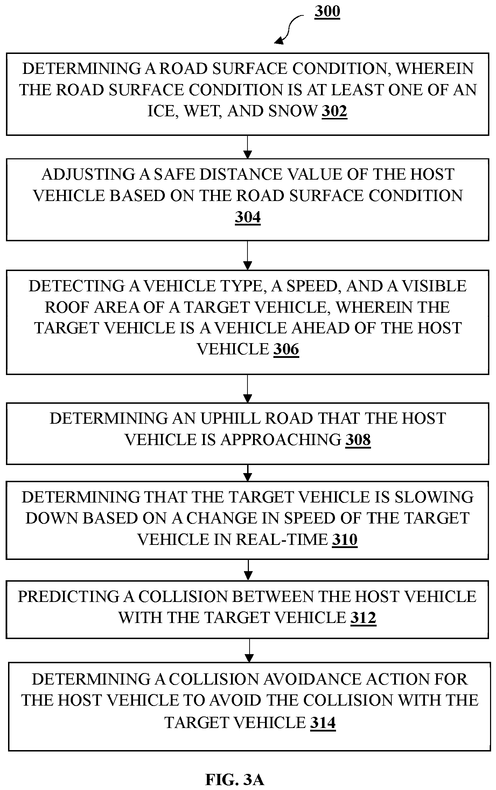

FIG. 3A shows the block diagram of a method for collision avoidance based on surface road condition according to an embodiment. According to an embodiment it is a method comprising determining, by a processor, a road surface condition, wherein the road surface condition is at least one of an ice, wet, and snow at step 302; adjusting, by the processor, a safe distance value of the host vehicle based on the road surface condition at step 304; detecting, by a computer vision module, a vehicle type, a speed, and a visible roof area of a target vehicle, wherein the target vehicle is a vehicle ahead of the host vehicle at step 306; determining, by the processor, an uphill road that the host vehicle is approaching at step 308; determining, by the processor, that the target vehicle is slowing down based on a change in speed of the target vehicle in real-time at step 310; predicting, by the processor, a collision between the host vehicle and the target vehicle at step 312; determining, by the processor, a collision avoidance action for the host vehicle to avoid a collision with the target vehicle at step 314.

In an embodiment, the system is configured for autonomously executing the collision avoidance action by the host vehicle and wherein the host vehicle is an autonomous vehicle.

In an embodiment, a type of vehicle or vehicle type may be referring to a broad category of vehicles such as cars, trucks, vans, motorcycles, etc., while a model of vehicle refers to a specific version of a particular vehicle type produced by a manufacturer with a unique name and features, such as the Volvo S60, XC90, XC60, and V90.

In an embodiment of the system, the collision avoidance action comprises generating an alert in the host vehicle, wherein the alert is at least one of a text message, a visual cue, a sound alert, a tactile cue, and a vibration. In an embodiment of the system, the collision avoidance action comprises further increasing the safe distance value between the host vehicle and the target vehicle.

In an embodiment of the system, the collision avoidance action comprises waiting until the target vehicle safely passes the uphill road. In an embodiment of the system, the collision avoidance action comprises at least one of initiating a reverse movement by the host vehicle; and initiating a lane change by the host vehicle.

In an embodiment of the system, the collision avoidance action comprises broadcasting a message to vehicles behind the host vehicle about the target vehicle sliding down the uphill road. In an embodiment of the system, the collision avoidance action comprises broadcasting a message to a neighboring vehicle, wherein the message comprises an instruction of a maneuver for the neighboring vehicle to avoid an impending collision using a collective and coordinated action.

In an embodiment of the system, the collision avoidance action comprises predicting the collision and alerting a driver of the host vehicle about deployment of air bags during the collision. In an embodiment of the system, the collision avoidance action comprises predicting the collision and alerting a driver of the host vehicle and advising the driver to brace for impact posture. In an embodiment of the system, the collision avoidance action comprises predicting the collision and alerting a driver of the host vehicle and advising him to leave the host vehicle.

In an embodiment of the system, the collision avoidance action comprises alerting the target vehicle about an impending collision. In an embodiment of the system, the collision avoidance action comprises alerting neighboring vehicles about the collision.

In an embodiment of the system, the collision avoidance action comprises at least one of generating an alert in the host vehicle; maintaining, at least the safe distance value between the host vehicle and the target vehicle; initiating a reverse movement by the host vehicle; initiating a lane change by the host vehicle; alerting the target vehicle about an impending collision; and broadcasting a message to a neighboring vehicle, wherein the message comprises an instruction of a maneuver for the neighboring vehicle for avoiding the impending collision using a collective and coordinated action. In an embodiment of the system, the collision avoidance action is determined and executed in real-time until the target vehicle safely passes the uphill segment.

In an embodiment of the system, the collision avoidance action is determined via the computer vision module comprising an artificial intelligence engine, wherein the artificial intelligence engine comprises a machine learning algorithm. In an embodiment of the system the collision avoidance action further comprises activating a camera of the computer vision module to record surroundings of the host vehicle.

In an embodiment of the system, the collision avoidance action comprises alerting a third party about an impending collision. In an embodiment of the system, the third party is an emergency service.

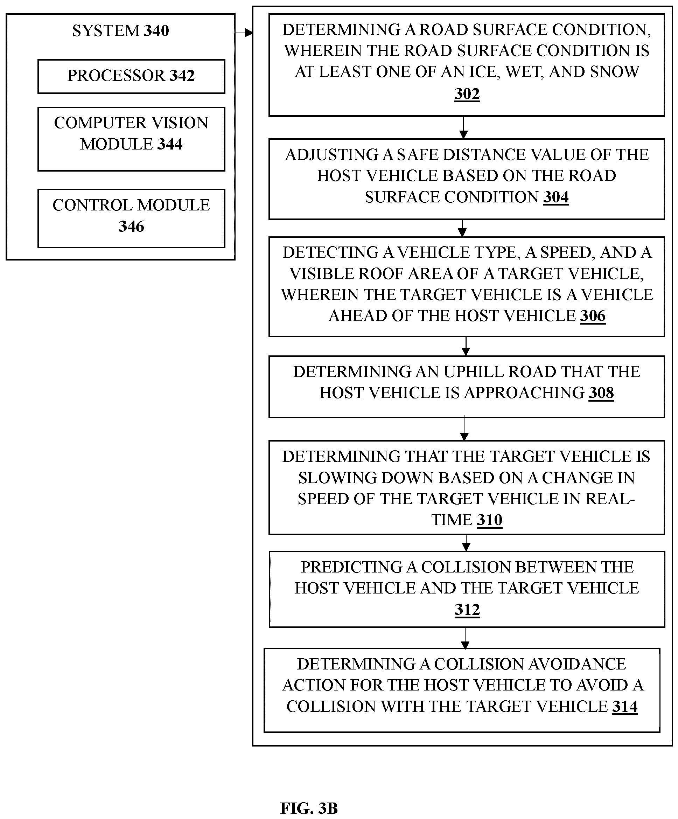

FIG. 3B shows the block diagram of a system for collision avoidance based on surface road condition according to an embodiment. According to an embodiment it is a system 340, comprising: a processor 342, a computer vision module 344, and a control module 346; wherein the processor 342 is operable to: determine, by the processor, a road surface condition, wherein the road surface condition is at least one of an ice, wet, and snow at step 302; adjust, by the processor, a safe distance value of the host vehicle based on the road surface condition at step 304; detect, by the computer vision module, a vehicle type, a speed, and a visible roof area of a target vehicle, wherein the target vehicle is a vehicle that is ahead of the host vehicle at step 306; determine, by the processor, an uphill road that the host vehicle is approaching at step 308; determine, by the processor, that the target vehicle is slowing down based on a change in speed of the target vehicle in real-time at step 310; predicting, by the processor, a collision between the host vehicle and the target vehicle at step 312; determine, by the processor, a collision avoidance action for the host vehicle to avoid the collision with the target vehicle at step 314 and wherein the host vehicle is an autonomous vehicle. According to an embodiment of the system, the system is operable to be a component of the host vehicle.

According to an embodiment of the system, the road surface condition is determined by receiving a real-time weather broadcast. According to an embodiment of the system, the road surface condition is determined by a map showing an icy road in a route.

According to an embodiment of the system, the road surface condition is determined by detecting a road condition in real-time via the computer vision module. According to an embodiment of the system, the road surface condition is determined by analyzing a scattering of an emitted beam of light on a road surface using a filtering technique on an image that is captured by the computer vision module.

According to an embodiment of the system, the road surface condition is detected by using vehicle dynamics sensor data and an image obtained of surroundings ahead of the host vehicle by a camera, wherein the camera is a monochrome camera.

According to an embodiment of the system, a surface condition observer classifies a road condition based on an evaluation of the image from the camera and comparing it with the vehicle dynamics sensor data.

According to an embodiment of the system, the surface condition observer further considers a local weather data and derives the road surface condition, wherein the local weather data comprises a temperature, a humidity value, a rainfall, a sleet fall, a snow fall, a wiper activity, and a cloud data.

According to an embodiment of the system, the road surface condition is detected by identifying a road sign using the computer vision module. According to an embodiment of the system, the road surface condition is detected by Vehicle-to-Infrastructure (V2I) communication.

According to an embodiment of the system, the road surface condition is determined by determining that a neighboring vehicle is having difficulty in navigation. According to an embodiment of the system, the road surface condition is determined by receiving a broadcast message from a neighboring vehicle about the road surface condition. According to an embodiment of the system, the road surface condition is determined by a frictional coefficient between a road on which the host vehicle is traveling and a tire of the host vehicle via an accelerometer sensor.

According to an embodiment of the system, the road surface condition is determined by a road condition sensor, wherein the road condition sensor is at least one of a temperature sensor, an infrared sensor, an accelerometer, a GPS sensor, and a humidity sensor.

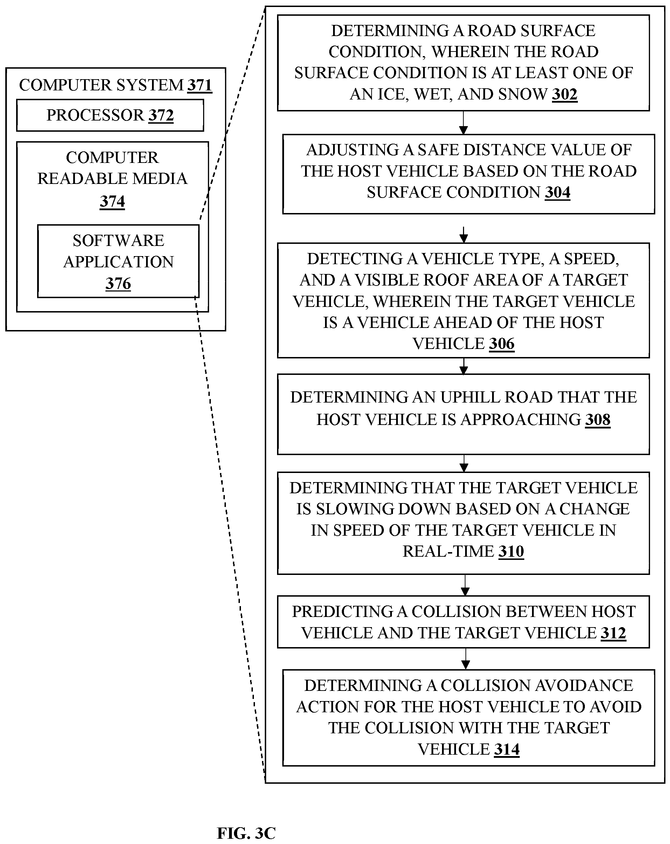

FIG. 3C shows the block diagram of a method stored on a non-transitory computer-readable medium for collision avoidance based on surface road condition according to an embodiment. According to an embodiment it is a non-transitory computer-readable medium 374 having stored thereon instructions executable by a computer system to perform operations comprising determining, by a processor, a road surface condition, wherein the road surface condition is at least one of an ice, wet, and snow at step 302; adjusting, by the processor, a safe distance value of the host vehicle based on the road surface condition at step 304; detecting, by a computer vision module, a vehicle type, a speed, and a visible roof area of a target vehicle, wherein the target vehicle is a vehicle ahead of the host vehicle at step 306; determining, by the processor, an uphill road that the host vehicle is approaching at step 308; determining, by the processor, that the target vehicle is slowing down based on a change in speed of the target vehicle in real-time at step 310; predicting, by the processor, a collision between the host vehicle and the target vehicle at step 312; determining, by the processor, a collision avoidance action for the host vehicle to avoid a collision with the target vehicle at step 314; and wherein the host vehicle is an autonomous vehicle. A software application 376 may be stored on the computer readable medium 374 and executed with the processor 372 of the computer system 371.

In an embodiment, the control module of a host vehicle determines a road surface condition, wherein the road surface condition is at least one of ice, wet, and snow. In an embodiment, the system of a vehicle is enabled for detecting icy conditions. It may be based on: (i) a weather broadcast which predicts/ forecasts an icy day (ii) a broadcast by the vehicles that are going uphill finding difficulties due to icy road surface condition (iii) the equipment on board of the vehicle itself.

In an embodiment, Autonomous vehicles (Avs) use a combination of sensors and algorithms to detect and respond to different road conditions, including the presence of ice on the road. Some of the methods to detect ice/ precipitation on the road include (i) Temperature sensors: like with snow, temperature sensors can be used to detect when the road surface temperature drops below freezing, which is an indicator that ice may be present. (ii) LiDAR: lidar sensors use laser light to create a 3D map of the environment around the autonomous vehicle. This can be used to detect changes in the surface of the road, including the presence of ice. (iii) Radar: radar sensors can detect the presence of ice on the road by measuring the reflectivity of the surface. Ice typically has a higher reflectivity than dry pavement, which can be detected by radar sensors, (iv) Infrared cameras: infrared cameras can detect the temperature of the road surface, which can be used to determine if there is ice present. Ice typically has a lower temperature than dry pavement, which can be detected by infrared cameras. (v) Road condition databases: some autonomous vehicles may use road condition databases to predict the presence of ice on the road. These databases can be compiled from data collected from various sources, including weather reports, road temperature sensors, and other autonomous vehicles.

In an embodiment detection of a snow/ice covered path of travel surface is via light subsurface scattering. A method for determining a snow/ice/sleet covered surface condition of a path of travel, the method comprising, emitting a beam of light, by a light emitting source, at a surface of the path of travel, capturing an image of the surface, by an image capture device mounted on the vehicle, in a downward direction relative to the vehicle, wherein the captured image captures the emitted beam of light, identifying a region of interest in the captured image having the captured emitted beam of light, analyzing, in the region of interest by a processor, a subsurface scattering of the emitted beam of light on the surface, including converting image components to Lab color space to separate color components from lightness components of the captured emitted beam of light, and applying feature extraction to at least one color component in the Lab color space using a filtering technique to detect edges in the region of interest, identifying the snow/ice/sleet covered surface condition in the region of interest by applying binary conversion to the Lab color space; and generating a snow covered path of travel surface signal in response to identifying the snow covered surface condition. Lab (L: Lightness; a*: Red/Green Value; b*: Blue/Yellow Value) color values give a way to locate and communicate colors. The image transformed from RGB into Lab color space readily captures relevant color information of the light beam in the image for analysis by isolating the influence of environmental noise. This involves transforming a RGB image (i.e., red-green-blue image) to a Lab color space for better detecting the broad blurring pattern of color changes with the light as the light signal scatters throughout the subsurface of the snow. Lab space includes various components having a dimension L for lightness and "A" and "B" for the color-opponent dimensions. The Lab color space includes all perceivable colors, which means that its scope exceeds those of the RGB color models.

Precipitation on a driving surface causes several different issues for a vehicle or a person traveling along a path of travel. For example, snow on a road reduces the coefficient of friction between the tires of the vehicle and the surface of the road resulting in vehicle stability issues. Detection of snow/ice on a road of travel is typically determined by a host vehicle sensing snow/ice on the road utilizing some sensing operation which occurs when the snow/ice is already impacting the vehicle operation such as detecting wheel slip. As a result, the vehicle monitors its own operating conditions (e.g., wheel slip) against dry pavement operating conditions for determining whether snow/ice is present.

In an embodiment, when the autonomous vehicle predicts an icy/snow covered/ wet road then the autonomous vehicle will make the adjustments for your routing. In an embodiment, the autonomous vehicle further adjusts for the safe distance value to a higher value than a normal situation. For example, during normal road conditions, if the safe distance is 20 feet, then upon predicting or detecting icy roads, that vehicle automatically updates the safe distance value to 40 feet. Any distance below 40 feet on an icy uphill road, will generate a warning, alerting the autonomous vehicle driver. When the autonomous vehicle is on an uphill icy road, it is going to further increase the safe distance to a higher value than that of the plain icy roads.

When the host vehicle is on an uphill road, and notices that a vehicle ahead of it is slipping, i.e., moving backwards, because of icy roads or for any other reason, then the host vehicle automatically starts to take action to avoid any possible collision. In an embodiment, the host vehicle may either move to a side lane or it will start going in reverse to avoid the vehicle slipping, i.e., moving backwards, until that situation is either resolved or the host vehicle is safe.

In an embodiment, advanced driver assistance systems (ADAS) may have sensors and algorithms that can detect the condition of the tires, including the tire pressure, tread depth, and type of tire, that are configured to provide warnings to the driver if the tires are not suitable for the current driving conditions, including icy roads. Avs use a combination of sensors, algorithms, and machine learning to detect and respond to different driving conditions, including the condition of the tires. Autonomous vehicles may have sensors that measure tire pressure, wear, and traction, and use this data to adjust the vehicle's behavior accordingly. For example, if a tire has less traction, the autonomous vehicle may detect this and adjust its driving style to compensate for the reduced traction.

In an embodiment, a sensor of the autonomous vehicle detects the tire parameters and provides an alert that the tire is not appropriate for the road surface condition. In an embodiment, the autonomous vehicle would adjust the driving behavior according to the road surface conditions.

In an embodiment, the road conditions may not be icy even when the weather is cold weather. In an embodiment, ice may be detected by vehicles who are driving on the icy roads by detecting that the friction is not as good when compared to normal road surface condition. In an embodiment, the vehicles that are already on the road, are reporting back that the road surface condition is slippery. Based on the input that the road conditions are icy, the routing system may provide alternate routes which have no icy roads or at best least icy roads.

In an embodiment, the control module of the host vehicle adjusts a safe distance value of the host vehicle based on the road surface condition. Referring to FIG. 1, in an embodiment, if vehicle 104 is riding on an icy road, then the safe distance is going to be automatically modified to a higher value than that of a normal road/ normal day, by the vehicle control system. If the vehicle is riding on an uphill road in an icy condition from point A to B, then the safe distance is further modified to a higher value. In an embodiment, in addition to automatically modifying the safe distance, additional warnings / alert messages are issued on the infotainment system on the vehicle 104 to attain the attention of the vehicle driver or rider.

Even after adjusting the safe distance, vehicle 104 observes that vehicle 102, which is ahead of vehicle 104, is losing traction, the vehicle 104 will provide warnings and may adjust the safe distance further. For example, if the safe distance is 20 feet on a normal day, then on an icy road it may be set to 30 feet, and on an icy uphill road it may further be set to 40 feet. In an embodiment, the vehicle warns if the safe distance is not maintained. In an embodiment, a warning is provided in vehicle 104, when the vehicle 102 which is ahead of vehicle 104, starts to slide down. In an embodiment, detecting icy roads, icy uphill roads, a vehicle 102, ahead of the host vehicle 104, and vehicle 104 start to make decisions to avoid the accident, vehicle 104 may be an autonomous vehicle.

In an embodiment, a warning system alerts the user of the vehicle that there is an icy road in the vehicle path. In an embodiment, the vehicle would set the safe distance value to a value higher than the normal road conditions.

In an embodiment, the system will also consider vehicle type and weight of the vehicle. When on icy roads, the weight and vehicle type have a huge factor on stopping distance. In an embodiment, based on the weight of the host vehicle, a safe distance is determined between the host vehicle and the target vehicle i.e., the vehicle in front of the host vehicle. In an embodiment, based on the weight of the target vehicle, a safe distance is determined between the host vehicle and the target vehicle i.e., the vehicle in front of the host vehicle. In an embodiment, based on the tire tread of the host vehicle, a safe distance is determined between the host vehicle and the target vehicle i.e., the vehicle in front of the host vehicle. In an embodiment, based on the tire tread of the target vehicle, a safe distance is determined between the host vehicle and the target vehicle i.e., the vehicle in front of the host vehicle. In an embodiment, the safe distance is determined based on at least one of the road surface condition, weight of the host vehicle, weight of the target vehicle, tire tread of the host vehicle, and tire tread of the target vehicle.

In an embodiment, the control module of the host vehicle detects a vehicle type, a speed, and a visible roof area of a target vehicle, wherein the target vehicle is a vehicle ahead of the host vehicle. In an embodiment, the autonomous vehicle may be driving to a destination performing vehicle detection using computer vision and may detect the parts of the target vehicle using computer vision.

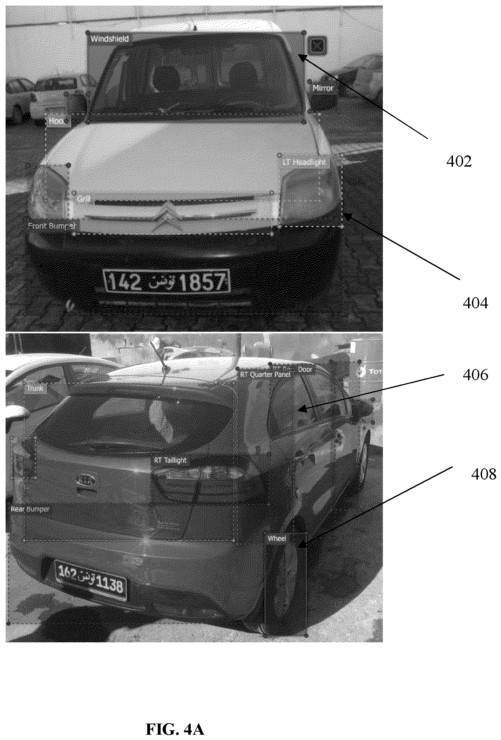

FIG. 4A shows parts of a vehicle being detected using a bounding box method. In an embodiment, parts of the vehicle are detected using the bounding box method. For example, results of a bounding box method used to detect a windshield 402, a headlight 404, a door 406, a wheel 408 are shown. In an embodiment, the bounding box may be a 3D bounding box. In an embodiment, a 3D bounding box may be used to better understand, and more accurately estimate, the depth parameter and orientation of the object. In computer vision, 3D bounding boxes provide more information than 2D bounding boxes because 3D bounding boxes provide information about an object's size, location, and orientation in the 3D world, which is important for various applications in autonomous driving. With the use of 3D bounding boxes, computer vision systems can more accurately detect and track objects in the environment, enabling more informed decisions and better performance in real-world scenarios. In an embodiment, the computer vision system may be utilizing both 2D and 3D methods in a hierarchical manner to first select regions of interest quickly, then it may try to gain more insight about the object with a 3D bounding box.

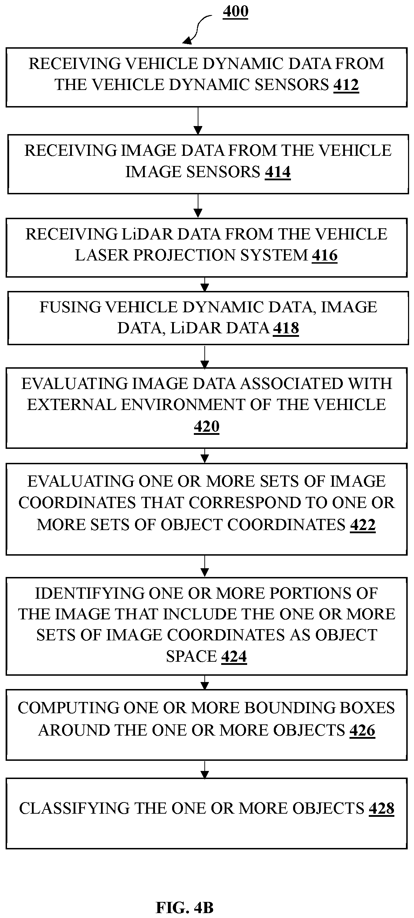

FIG. 4B is a process flow diagram of a method for identifying and classifying one or more objects according to an embodiment of the invention. Object detection is a computer technology related to computer vision and image processing that deals with detecting instances of semantic objects of a certain class, such as cars, bicycles, road signs, traffic signal lights, road infrastructure, boundary railings, etc., in digital images and videos. Object detection in autonomous vehicles also includes face detection, pedestrian detection, etc. The method may begin at block 412, wherein the method may include receiving vehicle dynamic data from the vehicle dynamic sensors. In an embodiment, a data reception module may communicate with the vehicle dynamic sensors of the vehicle to collect the vehicle dynamic data. In particular, the vehicle dynamic data may include, but may not be limited to, vehicle speed data, traction data, steering speed data, steering angle data, throttle angle data, vehicle acceleration data, brake force data, wheel speed data, wheel turning angle data, yaw rate data, transmission gear data, temperature data, Revolutions Per Minute (RPM) data, Global Positioning System (GPS)/ Differential Global Positioning System (DGPS) data, and the like. Vehicle dynamic data may be used to identify the current location of the vehicle, its steering angle, whether it is moving or at the intersection, etc. Vehicle trip dynamic data may be used to collect the data corresponding to the vehicle's capabilities while performing various maneuvers. Trip related data may also include data on the path such as number of lanes, whether uphill roads are present or not, intersection data such as if the intersection is wide, narrow, accident prone areas, etc. In one embodiment, a data reception module may package and store vehicle dynamic data on the memory.

The method may proceed to block 414, wherein the method may include receiving image data from the vehicle camera system. In an embodiment, the data reception module may communicate with the vehicle camera system to collect untrimmed images/video of the surrounding environment of the vehicle and the internal portions of the vehicle. The untrimmed images/video may include 360-degree external and internal views of the vehicle and surrounding environment of the vehicle. In one embodiment, the data reception module may package and store the image data on the memory that is associated with the vehicle trip dynamic data (of block 412).

The method may proceed to block 416, wherein the method may include receiving LiDAR data from the vehicle laser projection system. In an exemplary embodiment, the data reception module may communicate with the vehicle laser projection system to collect LiDAR data that classifies set(s) of object coordinates (e.g., three-dimensional LiDAR object coordinate sets) from one or more traffic related objects located within the surrounding environment of the vehicle. The set(s) of object coordinates may indicate the location, range, and positions of the one or more objects which the reflected laser waves were reflected off of with respect to a location/position of the vehicle. In one embodiment, the data reception module may package and store the LiDAR data on the memory that is associated with the vehicle trip dynamic data (of block 412).

The method may proceed to block 418, wherein the method may include fusing the vehicle trip dynamic data, image data, and LiDAR data. In an exemplary embodiment, the data reception module may communicate with the neural network processing unit to provide artificial intelligence capabilities to conduct multimodal fusion. The data reception module may utilize one or more machine learning/deep learning fusion processes to aggregate the vehicle trip dynamic data, image data, and LiDAR data stored on the memory by the data reception module (at blocks 412, 414, 416). The fused data may be evaluated against stored vehicle dynamic parameters, image recognition parameters, and object recognition parameters that are associated with a plurality of vehicle motion patterns stored within the memory and utilized by the neural network.

In particular, the neural network processing unit may execute machine learning/deep learning to determine one or more motion patterns from the fused data based on the evaluation of the fused data against the stored dynamic parameters, image recognition parameters, and object recognition parameters. The determination of one or more motion patterns may occur during each trip of the vehicle in which the vehicle trip dynamic data, image data, and LiDAR data is received to determine the one or more driving maneuvers. In one embodiment, the one or more motion patterns and at least one of the locations, ranges, and positions of one or more traffic related objects, map data, and additional vehicle dynamic data (e.g., steering angle, throttle angle, speed, acceleration, etc.) are evaluated using machine/deep learning techniques, image logic, and LiDAR logic to determine the one or more driving maneuvers (e.g., braking, reverse, lane change, merging, etc.).

The method may proceed to block 420, wherein the method may include evaluating the image data associated with the external environment of the vehicle and determining one or more sets of image coordinates that correspond to the one or more sets of object coordinates. In an embodiment, the neural network processing unit utilizes one or more machine learning/deep learning fusion processes and image logic to determine one or more image coordinates associated with traffic related objects located within the surrounding environment of the vehicle. As discussed above, such traffic related objects may include, but may not be limited to, other vehicles, traffic participants, intersections, roadway attributes, and roadside objects. The sets of image coordinates may include two dimensional (x, y) coordinates that represent one or more pixels of the image(s)/video that correspond to the location of one or more objects within the image(s)/video as determined by the neural network processing unit. In one embodiment, the neural network processing unit may utilize one or more machine learning/deep learning fusion processes and LiDAR logic to determine one or more sets of object coordinates that may be associated with the one or more traffic related objects. As discussed above, the one or more sets of object coordinates may include one or more sets of three-dimensional coordinates or geocentric coordinates based on the reception of one or more reflected laser waves by the LiDAR transceiver(s).

The method may proceed to block 422, wherein the method may include evaluating the image data associated with the external environment of the vehicle and determining one or more sets of image coordinates that correspond to the one or more sets of object coordinates. In one embodiment, upon determining the one or more sets of object coordinates, the neural network processing unit may access the preprogrammed LiDAR coordinates map stored on the memory that may include one or more sets of image coordinates that correspond to one or more sets of object coordinates. The neural network processing unit may utilize the preprogrammed LiDAR coordinates map to determine one or more sets of image coordinates of one or more traffic related objects that correspond to one or more sets of object coordinates of one or more traffic related objects to pinpoint portions of the image(s)/video that may include the one or more traffic related objects as sensed by the vehicle camera system and the vehicle laser projection system. The utilization of the preprogrammed LiDAR coordinates map may ensure that one or more traffic related objects are accounted for that are located within the surrounding environment of the vehicle and that are present within the travel path of the vehicle such as obstructions on the path, vehicles encountered during travel, or a type of intersection which is difficult to maneuver due to its geometry, etc.

The method may proceed to block 424, wherein the method may include identifying one or more portions of the image(s) that include the one or more sets of image coordinates as object space. In one embodiment, one or more portions of the image(s)/video that represent the one or more sets of image coordinates that correspond to the one or more sets of object coordinates as object space are identified. In other words, the portions of the image(s)/video that correspond to one or more sets of object coordinates of objects that reflect laser beam waves back to the LiDAR transceivers of the vehicle laser projection system are identified as object space.

The method may proceed to block 426, wherein the method may include computing one or more bounding boxes around one or more traffic related objects. In one embodiment, the method may compute one or more bounding boxes around the one or more portions of the object space to distinguish the traffic related objects and other regions of interest within the object space from other portions of the image(s)/video that do not include the one or more traffic related objects or do not correspond to regions of interest. The method may additionally compute characteristic data associated with traffic related objects enclosed within the computed bounding boxes as determined by the neural network processing unit. The characteristic data, for example, of a vehicle object that is identified may include, its size and shape, a driver, its visual turn signals, whether it is an autonomous vehicle or not, etc.

Upon computing the one or more bounding boxes around the one or more traffic related objects, the method may proceed to block 428, wherein the method may include evaluating the one or more bounding boxes and classifying the one or more traffic related objects. In one embodiment, the method may utilize the neural network processing unit to evaluate the traffic related objects enclosed within the one or more computed bounding boxes. The neural network processing unit may scan the portions of image(s)/videos enclosed within the one or more bounding boxes and may compare the one or more traffic related objects found within the one or more bounding boxes against traffic related object models that may be stored within the memory of the vehicle and utilized by the neural network. The neural network processing unit may compare the traffic related object(s) found within the one or more bounding boxes and may determine one or more traffic related objects that may be located within an environment of the vehicle (e.g., a vehicle, a sign board, a lane boundary, etc.). In one embodiment, the traffic related objects further to detect various parts within the object. For example, detecting windshield, a headlight, a door segment, a license plate, a tire etc., within a vehicle object.

In an embodiment, the neural network processing unit may compare the traffic related object(s) enclosed within the one or more computed bounding boxes against the traffic related object models to categorize one or more objects captured within the image(s) into various categories, groups, and subgroups. Using the categories, groups, and subgroups classification system, a large vehicle such as a commercial truck could be categorized as a commercial vehicle, with groups such as tractor-trailers, dump trucks, or box trucks, and subgroups such as flatbed trucks or refrigerated trucks. The classification system can be applied to vehicle identification, for example, passenger vehicles can be categorized as sedans, Sports Utility Vehicles (SUVs), or minivans, with further subgroups such as compact SUVs or full-size SUVs.

According to an embodiment, an intersection, a target vehicle near the intersection, vehicle type, traffic signal, lanes, lane markings, sign boards, etc., may be detected by the computer vision system aided by Artificial Intelligence/Machine Learning (AI/ML) algorithms. In an embodiment, it may be utilizing the bounding box method. According to an embodiment, the intersection is detected by detecting a traffic light. According to an embodiment, the traffic light is detected by at least one of a video camera of the computer vision module of the host vehicle, and by Vehicle-to-Infrastructure (V2I) communication.

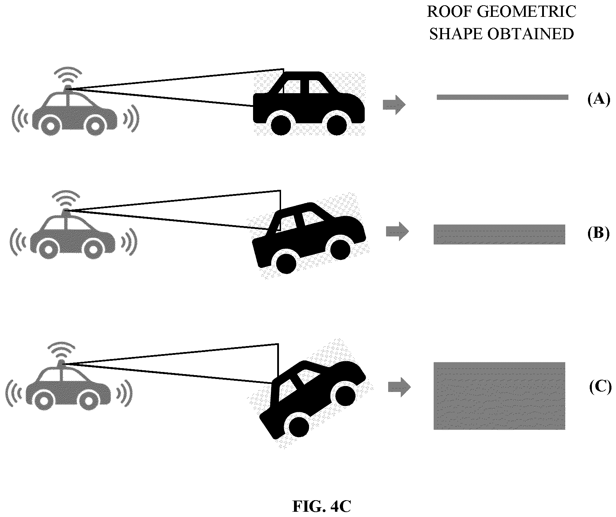

FIG. 4C shows an autonomous vehicle detecting a roof of another vehicle according to an embodiment. To detect the roof of the vehicle which is in front of the autonomous vehicle via a computer vision algorithm, the autonomous vehicle detects the parts of the vehicle and detects the area of the geometric shape that this roof has. Depending on how tilted the vehicle is, here are some examples. For example, if the target vehicle is driving with the same inclination as the point of view from the autonomous vehicle, then a smaller area in the geometric shape is obtained. If the vehicle in front of the autonomous vehicle starts to tilt, this area increases as shown in FIG. 4C (A) to (C). The autonomous vehicle, which is the host vehicle, is enabled to detect the roof area and change in the roof area in successive intervals of reading. In an embodiment, an autonomous vehicle will detect the roof of other vehicles as a geometric shape, for example, a rectangle. Depending on the inclination of the vehicle in front of the autonomous vehicle, the autonomous vehicle will obtain a geometric shape with different areas.

According to an embodiment, using the cameras of the autonomous vehicle and using computer and computer vision algorithms, the system or method detects the vehicle and the parts of the vehicle.

In an embodiment, it can be radars and image processing, which can detect the tilt of the vehicle or the position of the vehicle. In an embodiment, the system and / or method detects how much of the roof area in the image is captured.

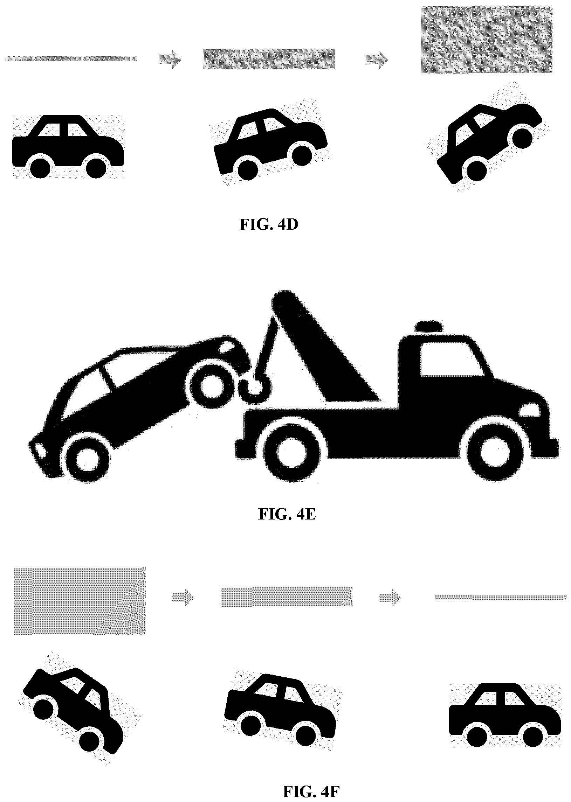

FIG. 4D shows an autonomous vehicle detecting the roof of another vehicle continuously according to an embodiment. In an embodiment, the autonomous vehicle will look for a roof area sequence. An autonomous vehicle will set a timer for sampling the roof in sequence, for example every 1 or 2 seconds. Once the roof has been detected, and the area obtained, the autonomous vehicle will look for changes in the area of the roof. As shown in FIG. 4D, the sequence of detecting a small area and then this area increases will make the autonomous vehicle infer that the vehicle is on a tilted road. The sequence of readings are needed to avoid false positives, such as a vehicle being pulled by a tow truck in an inclined position.

FIG. 4E shows an autonomous vehicle detecting, continuously, a roof of another vehicle which is a tow truck according to an embodiment. In an embodiment, the autonomous vehicle will look for a roof area sequence. The autonomous vehicle will set a timer for sampling the roof in sequence, for example every 1 or 2 seconds, to avoid false positives, for example, an inclined vehicle pulled by a tow truck, interpreting it as a vehicle on an inclined road.

FIG. 4F shows an autonomous vehicle detecting a roof of another vehicle continuously according to an embodiment. In an embodiment, the autonomous vehicle could also look for the vehicles coming in the opposite direction and observe the change in area of the roof. If the roof area is decreasing, then it further affirms that the segment of the road is inclined. The changes from a bigger roof area to a smaller roof area of a vehicle in the opposite lane would mean that the vehicle is moving downwards. In an embodiment, radars and lidars along with the computer vision system may be used to detect the roof area, speed, movement and also the direction of the vehicles around the autonomous vehicle.

In an embodiment, rear view cameras, radars and the LiDARs are used via the computer vision module to determine the roof area changes of the vehicles that are moving uphill or downhill.

In an embodiment, the autonomous vehicle measures a roof area of the first target vehicle in front of the autonomous vehicle, which is going in the same direction and the second target vehicle which is coming down in the opposite direction to the direction of the autonomous vehicle.

In an embodiment, radars are used to make sure that there are no vehicles behind the autonomous vehicle. In an embodiment, if there is a vehicle behind the autonomous vehicle, the autonomous vehicle will detect if it is an uphill segment or a flat segment of the road to make an appropriate decision on a collision avoidance maneuver. In an embodiment, the detection of the roof is performed by the autonomous vehicle by the front radars for front vehicles and the back radars for back vehicles.

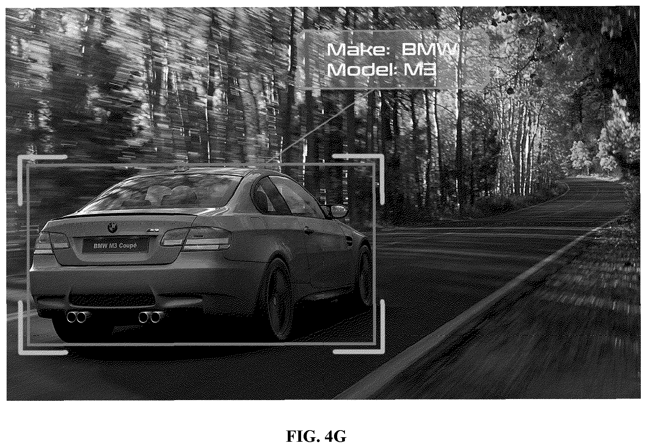

FIG. 4G shows an autonomous vehicle detecting a type, model and make of a vehicle according to an embodiment. The autonomous vehicle will perform car model recognition to know how big the roof area for that vehicle is expected.

In an embodiment, the control module of the host vehicle detects the license plate number of the target vehicle. License plate detection may be one of the features of an autonomous vehicle, where it enables the host vehicle to recognize and identify other vehicles on the road. License plate detection can be achieved using a combination of cameras, sensors, and software algorithms. According to an embodiment of the system, the vehicle type is determined from the license plate number of the target vehicle by referencing a database.

In an embodiment, the autonomous vehicle, equipped with cameras, captures images of the surrounding environment, including other vehicles on the road. The images captured by the cameras are processed using a computer vision system using image processing algorithms to identify license plate of a target vehicle. This involves analyzing the image for the distinctive shape and pattern of a license plate. Once the license plate has been identified, Optical character recognition (OCR) software is used to extract the alphanumeric characters from the plate. This involves analyzing the image for the specific shapes and patterns of the characters, and then translating those patterns into text or numbers. The extracted license plate number can then be used to look up information about the vehicle in a database via database lookup. In an embodiment, the details can include, but not limited to, the make and model of the vehicle, the registered owner, maximum weight, maximum speed. In an embodiment, license plate detection may also be used to track the movements of the target vehicle.

In an embodiment, the control module of the host vehicle determines an uphill road that the host vehicle is approaching. In an embodiment, the autonomous vehicle can detect an uphill road using a combination of sensors and mapping technology.

In an embodiment of the system, an uphill road is detected using GPS and mapping technology. The autonomous vehicle can use GPS to determine its location and map data to determine the slope of the road at that location. This information may also be used to adjust the vehicle's speed and power output to accommodate the incline.

In an embodiment of the system, an uphill road is detected using sensors, such as accelerometers and gyroscopes. These sensors can detect changes in the vehicle's acceleration and orientation, which can indicate that the vehicle is driving on an incline. By analyzing this data, the vehicle's control system may adjust the power output and torque of the vehicle's engine to maintain a consistent speed on the uphill road.

In an embodiment of the system, an uphill road is detected with the use of computer vision to detect the slope of the road. By analyzing images of the road ahead, the vehicle's onboard computer can detect changes in the angle of the road. The data may then be used to adjust the vehicle's speed and power output accordingly.

In an embodiment of the system, the autonomous vehicles may use a combination of sensors, mapping technology, and computer vision to detect an uphill road. This information may be used to adjust speed and power output to navigate safely and efficiently.

In an embodiment of the system, the uphill road is determined based on the vehicle type of the target vehicle, a speed of the target vehicle, and the visible roof area of the target vehicle. In an embodiment of the system, the uphill road is determined based on a GPS location of the target vehicle and map data to determine a slope of the uphill road. In an embodiment of the system, the host vehicle maps the visible roof area by the vehicle type, a vehicle model, and the speed to determine an inclination of the uphill road.

In an embodiment of the system, the collision avoidance action comprises waiting until the target vehicle crosses the uphill road.

In an embodiment of the system, the host vehicle is operable to detect a change in the visible roof area to determine an inclination of the uphill road by a continuous sequence of readings which are timed as per a predetermined interval. In an embodiment of the system, the host vehicle is operable to detect a change in the visible roof area of a vehicle coming in opposite direction of the target vehicle in another lane to determine an inclination of the uphill road by a continuous sequence of readings which are timed as per a predetermined interval. In an embodiment of the system, the host vehicle is operable to detect a start of the uphill road and an end of the uphill road.

In an embodiment of the system, the host vehicle is operable to notify via a notification to a driver of the host vehicle of an approaching uphill road, wherein the notification is at least one of a sound, a tactile cue, a visual cue, and a text message.

In an embodiment of the system, the host vehicle is operable to detect number of lanes on the uphill road via the computer vision module. In an embodiment of the system, the host vehicle is operable to correlate the visible roof area to determine an inclination of the uphill road based on the vehicle type and a vehicle model. In an embodiment of the system, the safe distance value of the host vehicle is further increased based on an inclination of the uphill road and the road surface condition. In an embodiment, safe distance value depends on the speed at which the target vehicle and the host vehicle are traveling.

In an embodiment of the system, the change in speed of the target vehicle is computed by the host vehicle from data of the speed that is gathered over time. In an embodiment of the system, the host vehicle is operable to detect whether the target vehicle is losing speed. In an embodiment of the system, the host vehicle is operable to detect whether the target vehicle is losing traction. In an embodiment of the system, the host vehicle is operable to predict whether the speed of the target vehicle approaches zero. In an embodiment of the system, the host vehicle is operable to predict whether the target vehicle will move backwards on the uphill road via the computer vision module using an artificial intelligence algorithm. In an embodiment of the system, the host vehicle is operable to detect the target vehicle moving backwards on the uphill road via the computer vision module comprising a radar. In an embodiment of the system, the host vehicle via rear view camera is operable to find vehicles behind the host vehicle. In an embodiment of the system, the host vehicle via lidar and radar finds vehicles in other lanes.

In an embodiment, there are several sensors that can be used to detect uphill roads by an autonomous vehicle, (i) Global Positioning System (GPS) sensors can be used to detect changes in elevation by measuring the vehicle's altitude. This information can be used to determine if the vehicle is driving on an uphill road. (ii) Inertial Measurement Unit (IMU) sensor measures the vehicle's acceleration and rotation rate. By analyzing the data from the IMU, an autonomous vehicle can detect changes in elevation and determine if it is driving on an uphill road. (iii) Light Detection and Ranging (LIDAR) sensors emit laser pulses and measure the time it takes for the pulses to reflect back. By using this data, LIDAR sensors can create a detailed 3D map of the road and detect changes in elevation, such as an uphill road. (iv) Radar sensors use radio waves to detect the distance and speed of objects. By analyzing the data from radar sensors, an autonomous vehicle can detect changes in elevation and determine if it is driving on an uphill road. (v) Cameras can be used to detect changes in the road surface, such as an uphill slope. By analyzing the images from cameras, an autonomous vehicle can detect changes in elevation and adjust its driving behavior accordingly.

In an embodiment, the autonomous vehicles may use a combination of sensors, to detect an uphill road and adjust its driving behavior to maintain safe distance from other vehicles.

In an embodiment, the autonomous vehicles may use other vehicle's roof area to detect an uphill road that is approaching.

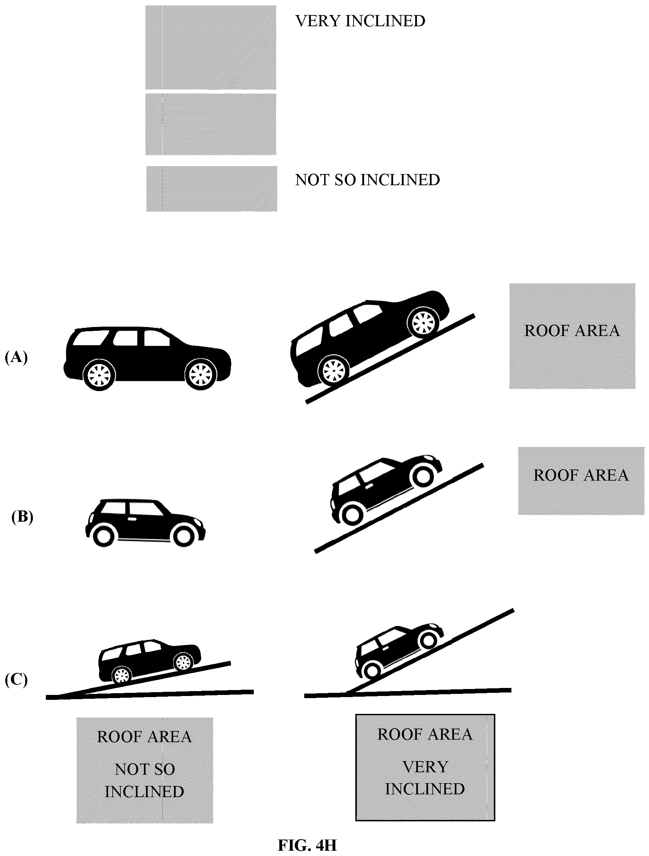

FIG. 4H shows an autonomous vehicle correlating the roof area with the inclination of the road based on vehicle type according to an embodiment. In an embodiment, the autonomous vehicle may determine how inclined the uphill road may be, based on the target vehicle's model information and roof area detected. In an example, for a similar inclined road, roof area detected for an SUV as shown at (A) of FIG. 4H may be greater than the roof area detected for a small vehicle as shown at (B) of FIG. 4H. For the same inclination, different roof areas are detected due to the size of the vehicle. This means that, for a similar detected roof area, for a small car could mean "very inclined" road, but for a long SUV could be "Not so inclined" as shown at (C) of FIG. 4H. Both roof areas of (C) of FIG. 4H are identical, however, based on the car model, the autonomous vehicle will expect a certain roof area for each vehicle type and therefore, the uphill classification will be different.

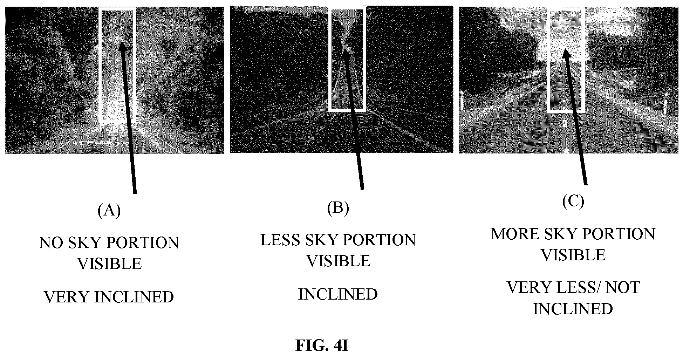

FIG. 4I shows an autonomous vehicle determining an inclination of the road based on an image analysis of the road ahead according to an embodiment. In an embodiment, the autonomous vehicles may use images of the road to detect an uphill road that is approaching. According to FIG. 4I, upon analysis of the image, if the computer vision system does not find any or very less visible sky and the road portion is visible at the horizon as shown at (A), then the algorithms of the computer vision system may conclude that the road is very inclined. It is also possible for the algorithms to mark the start and end of the uphill portion. If the computer vision system finds less visible sky at the horizon as shown at (B) of FIG. 4I, then the algorithms of the computer vision system may conclude that the road is not very inclined. It is also possible for the algorithms to mark the start and end of the uphill portion. If the computer vision system finds more visible sky at the horizon as shown at (C) of FIG. 4I, then the algorithms of the computer vision system may conclude that the road is not inclined or very less inclined. In an embodiment, the autonomous vehicle may also determine a downhill portion of the road by determining that the road is disappearing abruptly and then appearing abruptly by observing the lane or road markings.

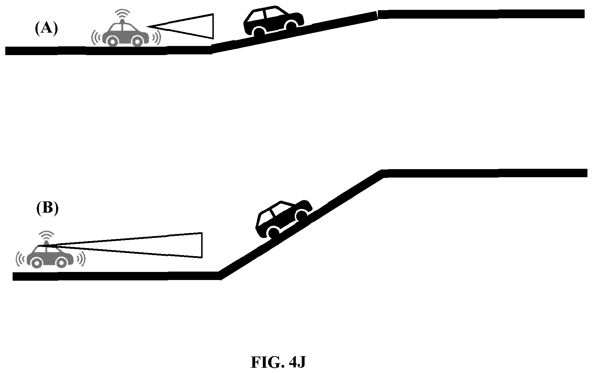

FIG. 4J shows an autonomous vehicle determining the inclination of the road according to an embodiment. Based on how inclined the uphill road is, the autonomous vehicle may determine a safe distance and will drive at different speeds. For example, when the autonomous vehicle determines that the uphill road inclination is minor, it may not increase the safe distance nor modify its speed as shown in (A) of FIG. 4J. When the autonomous vehicle determines that the uphill road inclination is very inclined, it will keep a greater distance and will take the uphill with much more speed to increase the momentum as shown in (B) of FIG. 4J.

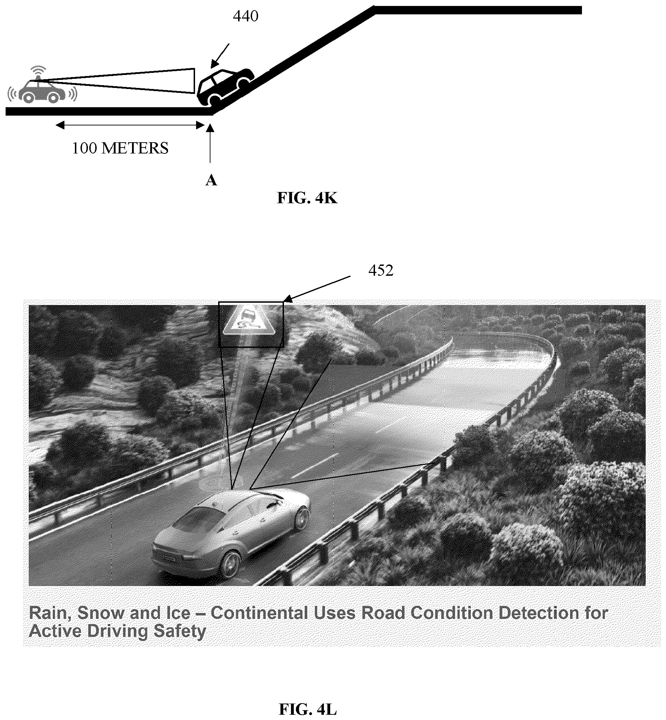

FIG. 4K shows an autonomous vehicle determining the start point of an uphill road according to an embodiment. According to an embodiment, the autonomous vehicle will detect where the first change of the sequence occurred, i.e., a change in the roof area of a target vehicle, and a distance to the target vehicle at the point where the autonomous vehicle detected the change in roof area. Then the control system of the autonomous vehicle may label the situation as "uphill detected." In FIG. 4K, point marked as A shows the uphill start point as detected by the autonomous vehicle and the distance at which it detected the uphill start point is 100 meters.

FIG. 4L shows an autonomous vehicle determining a road surface condition of an uphill road according to an embodiment. In an embodiment, sensors available in the vehicle are used to gain information on the grip of the road surface. In an embodiment, the autonomous vehicle adjusts the functions of advanced driver assistance systems to suit the determined road surface condition. For example, an automatic emergency braking must be initiated considerably earlier on a wet road than on a dry one to avoid an impending collision. In an embodiment, a friction coefficient, an interaction between tires and the road surface, is measured via a force that a tire applies to the road surface. This may also be referred to as a grip. In an embodiment, the system recognizes the road surface condition and classifies it as dry, wet, snow-covered, and icy. The road surface condition is classified based on the analysis of camera images of the surroundings in front of the autonomous vehicle and comparing it with vehicle dynamics data from the Electronic Stability Control (ESC), local and regional weather data including but not limited to temperature, wiper activity, cloud data, and the tire behavior. A friction coefficient may be derived using the data from Electronic Stability Control (ESC), local and regional weather data including but not limited to temperature, wiper activity, cloud data, and tire behavior. The camera may be a mono camera. A mono camera is short form for a monochrome camera. It is a type of camera that captures images in black and white or shades of gray. Unlike a color camera, which uses a filter array or other methods to capture images in full color, a mono camera typically has a single image sensor that records only the brightness values of the scene being captured. This makes it useful for applications such as scientific imaging, surveillance, and machine vision, where color information may not be needed or may even be a distraction. In an embodiment, the system may also look for sign boards 452, or road infrastructure in the autonomous vehicle environment to determine the surface condition of the road.

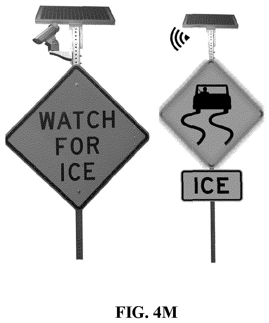

FIG. 4M shows an autonomous vehicle determining a road surface condition based on a sign board according to an embodiment. The autonomous vehicle may also rely on available infrastructure that detects icy roads. Computer vision techniques are used to process images or video streams captured by cameras mounted on the vehicle. These techniques can identify the shape and color of the signboards, as well as any text or symbols on them. For example, object detection algorithms can be used to locate and identify the signboards in the image, while optical character recognition (OCR) techniques can be used to extract the text from the image. Machine learning algorithms are then used to classify the signboards based on their shape, color, and content. In addition to cameras, the autonomous vehicles may also use other sensors such as LiDAR or radar to detect the signboards. LiDAR sensors use lasers to measure distances and create 3D maps of the environment, which can help identify the location and orientation of signboards. Radar sensors can detect the presence of objects and measure their speed, which can help detect signboards that may be obscured by other objects or in poor lighting conditions. Once a signboard has been detected and classified, the autonomous vehicle may use this information to classify a road surface condition and to make decisions about how to navigate the road ahead. For example, it may adjust its speed, a safe distance value and/or route based on determined road surface conditions.

Machine learning algorithms are used to classify the signboards based on their shape, color, and content. For example, a machine learning algorithm can be trained on a large dataset of signboards to recognize common features, such as the shape and color of stop signs or the text on signboards. Once the algorithm has been trained, it may be used to recognize new signboards based on their features. In addition to computer vision and machine learning techniques, the autonomous vehicle may also use natural language processing (NLP) algorithms to understand the meaning of the text on the signboards. NLP algorithms can analyze the text to determine the intended message, which can be used to make decisions about how to navigate the road ahead. For example, the vehicle may slow down, increase a safe distance, come to a stop, or move with additional caution when it detects an icy or slippery road condition.

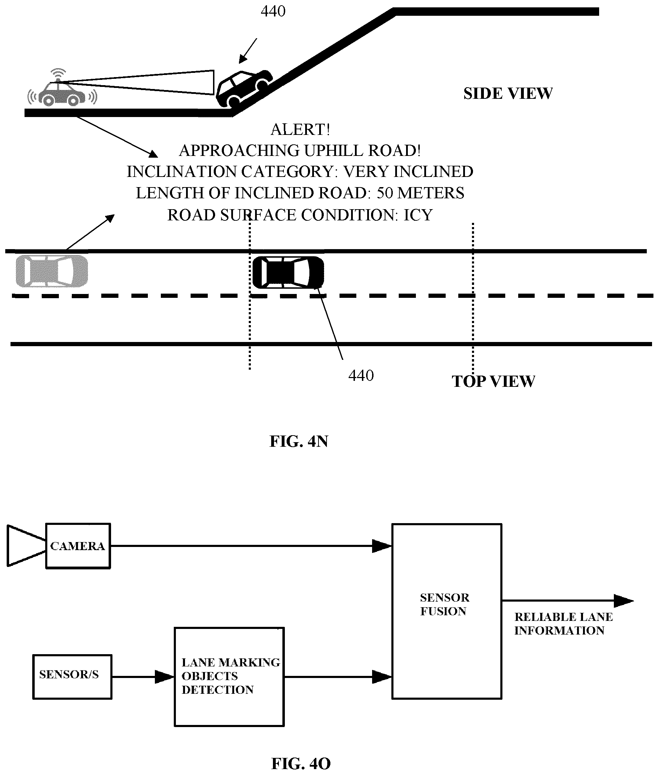

FIG. 4N shows an autonomous vehicle providing an alert about the road surface condition to an occupant of the autonomous vehicle according to an embodiment. An autonomous vehicle will detect if there is a driver/occupant in the autonomous vehicle, if so, the autonomous vehicle will notify the driver that the autonomous vehicle is approaching an uphill. The notification can also include the inclination category, length of the inclined road, road surface condition. In an embodiment, the driver/occupant is made aware of the approaching road conditions and, if preferred by the driver, she/he could decide to take over the steering wheel.

In an embodiment, the autonomous vehicle will detect the number of lanes in the uphill. FIG. 4O illustrates a block diagram of a lane detection system according to an embodiment. A lane detecting system for a vehicle includes a camera disposed of at the vehicle so as to have a field of view forward of the vehicle. The camera captures image data. A non-vision based sensor is disposed of at the vehicle so as to have a field of sensing forward of the vehicle. The non-vision based sensor captures sensor data. A control includes at least one processor operable to process image data captured by the camera and sensor data captured by the non-vision based sensor. The control, responsive to processing of captured image data, detects visible lane markers painted on the road along which the vehicle is traveling. The control, responsive to processing of captured sensor data, detects road-embedded elements disposed along the road. The control determines at least the lane along which the vehicle is traveling based on the detected lane markers or the detected road-embedded elements. FIG. 4O illustrates a block diagram of a lane detection system according to an embodiment. Lane marking data from the camera (vision based sensor/s) is fused in a sensor fusion module with the lane marking and object position data utilizing a non-vision sensor/s such as Lidar, radar, ultrasonic sensors, etc. When the lane markings are missing or snow covered or at nighttime with heavy rain, the system can still detect reliable lane location utilizing the output of non-vision based sensors. Typically, an autonomous vehicle would be equipped with a suite of sensors, including multiple machine vision cameras deployed at the front, sides and rear of the vehicle, multiple radar sensors deployed at the front, sides, and rear of the vehicle, and/or multiple lidar sensors deployed at the front, sides, and rear of the vehicle. All of the sensors can be used to detect lanes based on a region of interest. In an embodiment, the system may utilize the image data captured by the camera as a way of detecting lane markers and determining the lanes of the road (when the lane markers are exposed and viewable by the camera) and may or may not utilize the non-vision based sensor data in such situations (when the camera is capable of detecting lane markers). When it is determined that the lane markers are worn or obscured or not viewable, the system may utilize the sensor data sensed by the non-vision based sensors to detect the lane objects or elements disposed on or in the road.

According to an embodiment of the system, a lane next to the host vehicle is detected via a computer vision module comprising a radar, a lidar, a camera, a GPS, and an artificial intelligence engine comprising a machine learning algorithm.

Sensor fusion is the process of combining data from multiple sensors to improve the accuracy, reliability, and efficiency of the information collected. It involves integrating information from different sources, such as cameras, radar, lidar, and other sensors, to obtain a more complete and more accurate picture of the environment. Sensor fusion may be able to reduce errors and uncertainties that can arise from using a single sensor and to obtain a more comprehensive understanding of the world around us. By combining data from multiple sensors, autonomous vehicle systems can make more informed decisions and respond to changing conditions in real-time. The process of sensor fusion typically involves several steps, including data acquisition, signal processing, feature extraction, data association, and estimation. Different algorithms and techniques may be used to integrate the information from multiple sensors, depending on the application and the specific sensors being used.

According to an embodiment, an AI-based lane detection/ object may be used in combination with sensor fusion techniques. Some of the algorithms that are suitable for lane detection include, but not limited to: (i) Hough Transform: the Hough Transform algorithm is a classic approach to lane detection that works by identifying straight lines in an image. The Hough Transform can be used to detect the edges of lane markings and to estimate the position and orientation of the lanes. (ii) Convolutional Neural Networks (CNNs): CNNs are deep learning algorithms that have been widely used for lane detection. A neural network is trained on lane data obtained from various sensors to recognize the features of lane markings, such as their color, shape, and texture. Once the network is trained, it can be used to detect and classify lanes in real-time. (iii) Support Vector Machines (SVMs): SVMs are machine learning algorithms that work by learning a boundary that separates the lane markings from the rest of the image. The SVM algorithm can be trained using labeled data to create a model. The model is then used to detect the position and orientation of the lanes. (iv) Markov Random Fields (MRFs): MRFs are a probabilistic graphical model that work by modeling the relationship between neighboring pixels in an image to identify the position and orientation of the lane markings. MRFs can be combined with other algorithms, such as CNNs or SVMs, to create a more robust and accurate lane detection system.

The system may provide an output indicative of the determined lane or lanes (as determined based on processing of the captured image data or processing of the captured sensor data). The output may be used to determine if the other vehicles are allowed to turn into the lanes, whether the lane is narrow or wide enough to make decisions on clearance for a turning vehicle. The output is provided to a driving assist system of the vehicle, so as to provide a warning or exercise caution while other vehicles turn into those identified lanes. Optionally, the output may be provided to an autonomous vehicle control system, whereby the vehicle is autonomously controlled to follow an action, either to maintain lane, change lane, or reverse, etc., to avoid any impact from the other vehicles. For autonomous vehicles, an occupant of the vehicle may, under particular circumstances, be desired or required to take over operation/control of the vehicle and drive the vehicle so as to avoid potential hazards for as long as the autonomous system relinquishes such control or driving. Such an occupant of the vehicle thus becomes the driver of the autonomous vehicle.

In an embodiment, when the autonomous vehicle detects at least two lanes in the same direction in which the autonomous vehicle is driving, the autonomous vehicle may perform a lane change and/ or keep a greater distance. In case the target vehicle, a vehicle ahead of the autonomous vehicle, happens to slip backwards, the autonomous vehicle may perform a lane change. However, if the lane change can be performed before starting the uphill segment, then the autonomous vehicle may perform a lane change. If the autonomous vehicle finds other vehicles driving in both! all detected lanes there might be no difference if the autonomous vehicle performs a lane change. In an embodiment, it may not be possible for the autonomous vehicle to perform a lane change due to lane occupation by other vehicles, in which case, the autonomous vehicle may increase the safe distance from other vehicles. If there is only one lane, or if all the detected lanes are occupied, then depending on the inclination of the uphill, the autonomous vehicle may keep a greater safe distance.

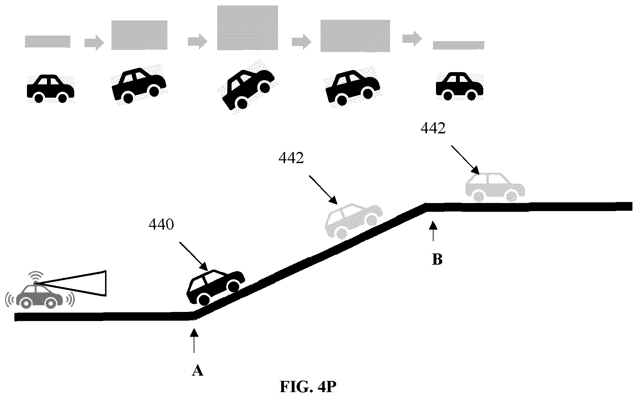

FIG. 4P shows an autonomous vehicle detecting an end of an uphill road according to an embodiment. The autonomous vehicle may detect the length of the uphill, by detecting an end segment of uphill, by using roof area detection method. In an embodiment, it may use a vehicle 442, which is ahead of the target vehicle 440. The autonomous vehicle will detect a point at which a roof area of vehicle 442 is no longer detected. The autonomous vehicle may interpret the point shown as point B as the uphill end. From point A and point B the length of the uphill segment is computed. Detection of Point A is elaborated in FIG. 4K.

In an embodiment, the autonomous vehicle may also check via the GPS if the uphill segment of the road is straight or has a curvature. In case of curvature, the length of the uphill may be labeled as "Inconclusive" or "Inaccurate," and the autonomous vehicle may further be cautious while driving such uphill segments of the road.

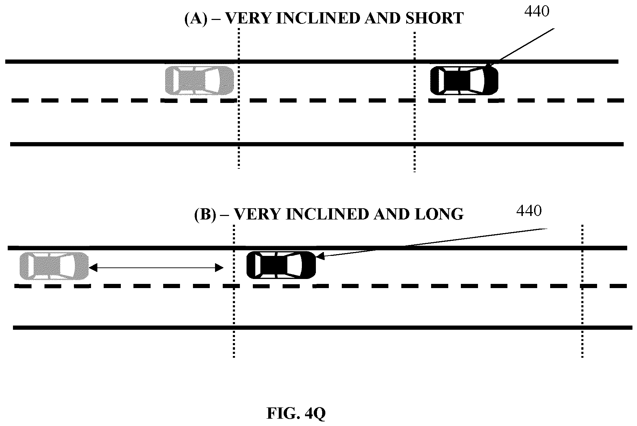

FIG. 4Q shows an autonomous vehicle categorizing uphill roads according to an embodiment. In an embodiment, the autonomous vehicle may categorize the uphill road into at least two categories. In an embodiment, there may be more than two categories. The qualitative categories are based on the quantitative assessment of the uphill segment. In an embodiment, the uphill road may be categorized as "very inclined and short, and the autonomous vehicle may decide to wait until the target vehicle 440 passes the uphill segment as shown in (A) of FIG. 4Q. In an embodiment, the uphill road may be categorized as "very inclined and long, and the autonomous vehicle may decide to keep a greater distance from the target vehicle 440 before starting the uphill segment as shown in (B) of FIG. 4Q.

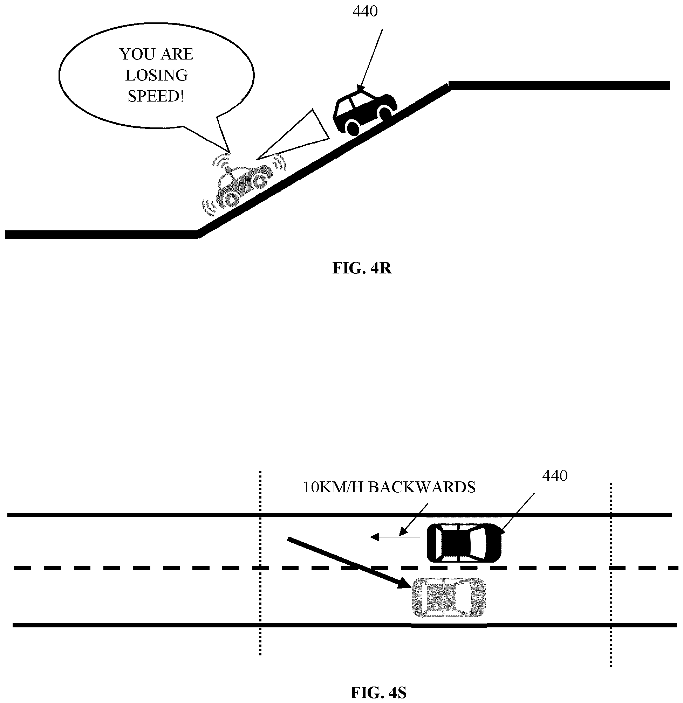

FIG. 4R shows an autonomous vehicle detecting a speed of a target vehicle in real-time according to an embodiment. In an embodiment, the autonomous vehicle may detect the real time speed of the target vehicle 440. When the autonomous vehicle is driving in the uphill segment, it may follow the rule "Don't power up (or stop) when going up hills."

In an embodiment, the autonomous vehicle may detect if the target vehicle 440 is losing traction/speed. The autonomous vehicle may detect a likelihood of collision, i.e., if it is likely that the target vehicle may move backwards and therefore hit the autonomous vehicle.

FIG. 4S shows an autonomous vehicle deciding a collision avoidance action based on a speed of a target vehicle according to an embodiment. In an embodiment, the autonomous vehicle detects that the target vehicle speed is reaching 0 km/h, meaning that the target vehicle may start going backwards at some point. Then the autonomous vehicle may decide to perform a lane change, if possible and allowed, based on number of lanes and the traffic in the lanes.

In an embodiment, the autonomous vehicle may detect deceleration of the vehicle. It may predict at what point the target vehicle may reach a zero speed and may predict the backward movement of the target vehicle.

In an embodiment, the autonomous vehicle may detect that the target vehicle 440 is going backwards, it may inform other oncoming vehicles using V2V, so that the oncoming vehicles may perform a lane change as well or the oncoming vehicles may not take the uphill road segment until the situation is clear.

In an embodiment, the autonomous vehicle may detect that the lane change is not possible, the autonomous vehicle will just "accept" the collision and will brake. However, the notification will still be sent to other vehicles around the autonomous vehicle to prevent a pile-up.

Additionally, the autonomous vehicle may also submit an "icy uphill" notification in a server to warn the oncoming vehicles in that path.

In an embodiment, the autonomous vehicle may keep driving until the uphill ride is passed if no collision event is predicted.

The system or methods are described as with some examples, but they are not limiting. The idea is not limited to just these examples. The algorithms sometimes were presented to show that the step is possible. But of course, it is not limited to the specific object detection, lane detection or road surface condition detection algorithms presented. The steps are also not necessarily in the strict order, so they can be exchangeable, or they can be processed parallelly.

In an embodiment, the autonomous vehicle detects a type of vehicle that is in front of it to assess whether the road segment is uphill. If the autonomous vehicle further detects that the target vehicle, which is the vehicle in front of the autonomous vehicle, is going backwards, then the autonomous vehicle may immediately brake. If the detected target vehicle type is a large vehicle for example, an SUV, then the autonomous vehicle may predict that though the autonomous vehicle stopped because of the target vehicle, which is a large vehicle, the autonomous vehicle will also go backwards as well after the collision. Then the autonomous vehicle will start informing the vehicles behind the autonomous vehicle. In an embodiment, the autonomous vehicle may broadcast that "a large vehicle will impact in two seconds." The message can be based on a vehicle-to-vehicle communication. In an embodiment, the autonomous vehicle may display a warning in an infotainment system of the autonomous vehicle like "Brace for impact in two seconds."

In an embodiment, the system performs detection of an icy uphill and increases a safe distance between the autonomous vehicle and the other vehicles.

In an embodiment, the system performs a corrective action to avoid the accident, i.e., a collision avoidance maneuver.

In an embodiment, in case the autonomous vehicle predicts that an impact is imminent based on an analysis of the situation around it, the autonomous vehicle may activate the camera, so that it captures what is happening surrounding the autonomous vehicle and with the autonomous vehicle during the impact. In an embodiment, the video may later be analyzed for detecting possible steps that can minimize the impact, avoid the impact, etc., for a future scenario. In an embodiment, the video may be analyzed to find out which vehicle may be at fault to act as evidence to the authorities. In an embodiment, the autonomous vehicle may ask the driver to step in and take corrective actions or at least let the driver take over. In an embodiment, if there is a way for a driver to move away from the vehicle and let the vehicle take the impact, the driver may decide so.

In an embodiment, if the autonomous vehicle is going to be impacted, then the autonomous vehicle could notify the user in the screens or in the phone, it can make an alarm noise, or display flashing lights, display a flashing message, to grab the attention of the surrounding vehicles about the impending collision.

In an embodiment, the autonomous vehicle may determine that the impact will be five miles per hour, and it will not impact the autonomous vehicle too much. In an embodiment, if the autonomous vehicle detects that a target vehicle is sliding down at 10-15 miles per hour, and may have a major impact, it really will let the occupant notify that the airbag might be deployed. In an embodiment, the impact analysis also considers the size of the target vehicle whether it is small or big.

In an embodiment, an autonomous vehicle may be slipping backwards on the icy uphill segment and is giving out the information to other vehicles surrounding the autonomous vehicle. The autonomous vehicle, in an embodiment, may have a rear display to warn the oncoming vehicles about the situation. The information may be received by the non-autonomous vehicles via a wireless communication or vehicle-to-vehicle communication. In an embodiment, the information may be relayed via internet connection based on the location of the other vehicles.

In an embodiment, a way of communicating with other vehicles could be vehicle-to-vehicle communication, via a broadcast message that goes out of the autonomous vehicle. In an embodiment, if the other vehicles are not autonomous or not enabled with vehicle-to-vehicle communication, they may get an alert on a phone within a short range. In an embodiment, the alert could be via a flashing of the autonomous vehicle lights, honking the horn of the autonomous vehicle, a display on the back of the autonomous vehicle that would help notify that the autonomous vehicle or a target vehicle observed by the autonomous vehicle is headed backwards and creating a possible collision situation.

In an embodiment, the autonomous vehicle displays, via the dashboard, an instruction, and warning, that the driver or occupant can follow. If the vehicle is not an autonomous vehicle or the driver is in control of the autonomous vehicle, then the instructions displayed may be followed by the driver which would direct the vehicle to escape from a potential collision situation.

In an embodiment, the traffic situation may comprise of autonomous vehicles, high tech vehicles, and low-tech vehicles.

In an embodiment, a vehicle may receive an alert message of a vehicle sliding downhill. The recipient vehicle would take corrective actions to avoid the collision situation. The alert message may comprise of an action for avoiding the collision situation.

In an embodiment, it is a method comprising: determining an icy weather condition by a control module of an autonomous vehicle, by at least one of receiving, a real-time weather broadcast; determining, an icy road in a route; detecting, the icy weather condition in real-time; determining, that a neighboring vehicle is having difficulty in navigation; receiving, a broadcast message from a surrounding vehicle about the icy weather condition; upon determining that the autonomous vehicle is in the icy weather condition, performing, by the control module of the autonomous vehicle: adjusting, a safe distance value to a higher value than that of a value on a non-icy weather condition; determining, a new route with least number of icy roads; detecting, a visible roof area, a model, and a speed in real-time of a vehicle ahead of the autonomous vehicle; determining, an uphill road and an inclination of the uphill road based on the visible roof area and the model of the vehicle; determining, a change in speed of the vehicle ahead of the autonomous vehicle; upon determining that the change in the speed of the vehicle ahead of the autonomous vehicle is approaching zero, performing, by the control module of the autonomous vehicle, at least one of: generating, an alert in the autonomous vehicle; maintaining, at least the safe distance value between the autonomous vehicle and the vehicle ahead of the autonomous vehicle; initiating, a reversing action of the autonomous vehicle; initiating, a lane change action of the autonomous vehicle; broadcasting, a message to the neighboring vehicle; and wherein the method is operable for detecting and avoiding an accident in the icy weather condition.

In an embodiment, it is a method comprising: starting an autonomous vehicle, by a user; scanning a weather channel to determine a road condition on a path, by the user; knowing the road condition, reroute to a new path to avoid an icy road condition; when on the icy road condition, adjust a safe distance from other vehicles to a value higher than a value of non-icy road condition; detect an uphill road; when on the uphill road in icy condition, adjust the safe distance further to a value higher than the value of the icy road condition; when driving on icy road, detect a vehicle ahead of the autonomous vehicle and detect a change in speed of the vehicle; when the change in speed of the vehicle is approaching zero, perform at least one of a: generate, an alert in the autonomous vehicle; heighten plurality of sensors of the autonomous vehicle with priority in dealing with an icy weather condition; initiate, a reversing action of the autonomous vehicle after determining that there is enough free distance behind the autonomous vehicle; determining that there is a free spot to move to a side lane; initiate, a lane change action of the autonomous vehicle to the side lane; broadcast, a message to a neighboring vehicle for at least one of a change in lane and a reverse movement of the neighboring vehicle for a collective and coordinated action; and wherein the method is operable for detecting and avoiding accidents in the icy weather condition.

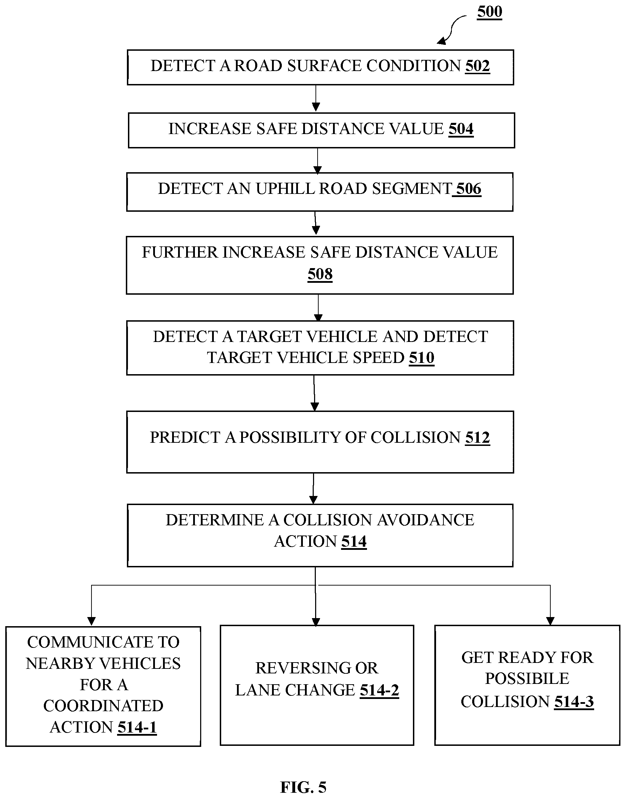

FIG. 5 shows a method in a host vehicle for collision avoidance on an icy uphill segment according to an embodiment. It comprises detecting a road surface condition at step 502 by the host vehicle. The host vehicle may detect the road surface condition using a computer vision module. It may classify the road surface condition as dry, wet, snow-covered, or icy. Once any condition other than dry condition is detected the method may increase the safe distance value at step 504 of the vehicle than that of a normal dry condition. Further, the host vehicle may proceed to detect if the vehicle is approaching an uphill road segment at step 506. If an uphill segment is detected, the method may further increase the safe distance value at step 508 of the vehicle to a higher value as compared to step 504. The method proceeds to detect a target vehicle and its speed at step 510. If the target vehicle speed is detected to be approaching zero, then the method of the host vehicle may predict that the target vehicle may slip down the uphill road and predict a possibility of collision at step 512. The method of the host vehicle will then proceed to determine a collision avoidance action at step 514. It may be based on observing the traffic around the host vehicle. For example, the collision avoidance action may comprise communicating the message that the target vehicle is slipping down to nearby vehicles and requesting them to change a lane or switch to reverse for a coordinated action at step 514-1 in order to avoid the collision or reduce the impact of the collision. In another variation, if there is no observed traffic around the host vehicle the host vehicle may itself perform the collision avoidance action by either changing a lane or by going into reverse in the same lane at step 514-2. In another variation, when the host vehicle predicts that the impact is inevitable, an alert message may be generated within the host vehicle to alert the driver to brace for impact at step 514-3. Any of the steps 514-1, 514-2, and 514-3 or a combination may be executed that may be suitable for the scenario analyzed by the host vehicle.

According to an embodiment of the system, the safe distance value is set to a higher value than that of a value on a dry road surface condition. According to an embodiment of the system, the system is further operable to determine a new route with least number of icy roads.

According to an embodiment of the system, the vehicle type is detected via the computer vision module by detecting a license plate number of the target vehicle. According to an embodiment of the system, the license plate number is matched with the vehicle type by referencing a database.

According to an embodiment of the system, the host vehicle is further operable to detect the vehicle type and a vehicle model of the target vehicle. According to an embodiment of the system, the speed of the target vehicle is determined in real-time via the computer vision module comprising a camera, a lidar, a GPS, and a radar.

According to an embodiment of the system, the computer vision module further comprises an artificial intelligence engine and a machine learning algorithm. According to an embodiment of the system, the speed of the target vehicle is determined in real-time via a radar.

According to an embodiment of the system, the visible roof area of the target vehicle is detected using a bounding box algorithm. According to an embodiment of the system, the bounding box algorithm is used in conjunction with a machine learning algorithm for object detection, wherein the machine learning algorithm is a convolutional neural network (CNN).

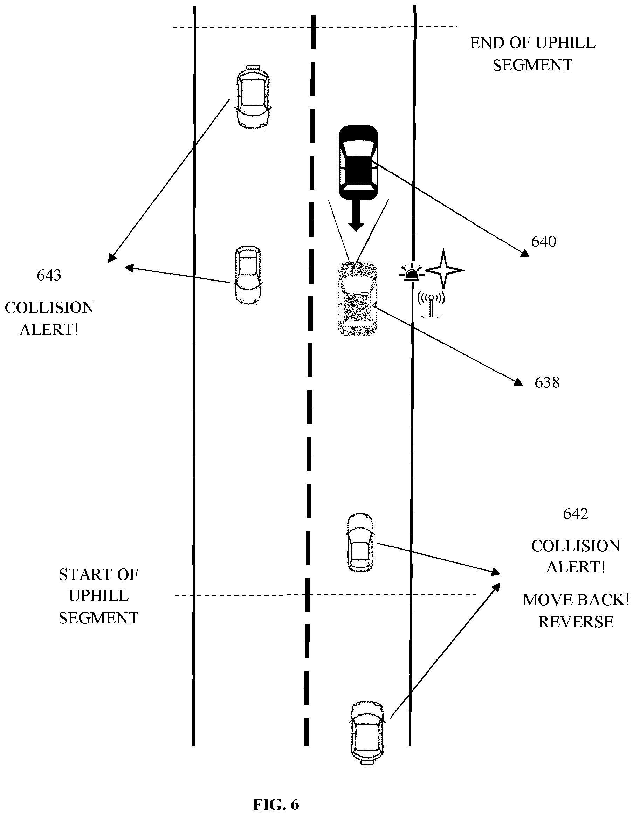

FIG. 6 shows an example of a host vehicle alerting the nearby vehicles about the target vehicle sliding on an uphill road segment. The host vehicle 638 after sensing that the target vehicle 640 ahead of the host vehicle 638 starts slipping, immediately the host vehicle alerts the nearby vehicle 642 and 643 via a visual alert, a sound alert and via communicating a message. The message may comprise a request to the nearby vehicle for a collision avoidance action which may be a lane change or a reverse. It may alert them so that a pile up may be avoided by the nearby vehicles taking appropriate action due to the alert provided by the host vehicle. The vehicles in opposite lane 643 may also be alerted if there is a possibility that the possible collision may also impact the vehicles in opposite lane 643. The nearby vehicle 642, upon receiving the alert, may not even take the uphill segment, until the uphill segment is clear or may reverse so that it may not be involved in the impact thus reducing the pile up of impact.

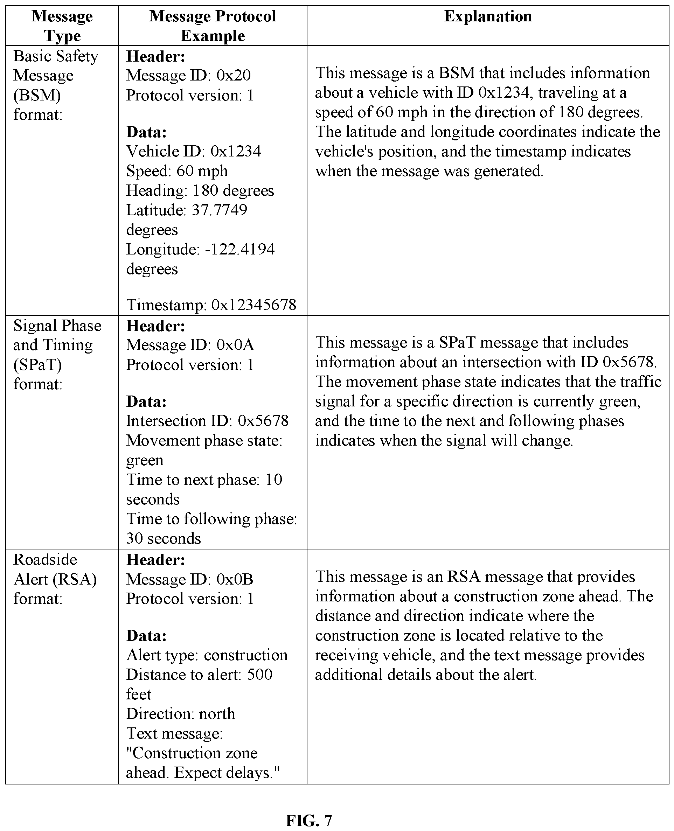

FIG. 7 shows example messages in Dedicated Short-Range Communications (DSRC) message format. FIG. 7 shows: (i) Basic Safety Message (BSM) format: BSM is a fundamental message type in DSRC, used for transmitting information about a vehicle's status, location, and movement to other vehicles in the area. In the example message, the header contains the message ID and protocol version, while the data section contains specific information about the vehicle, such as its ID, speed, heading, and position. The timestamp indicates when the message was generated and can be used by other vehicles to determine the current status of the transmitting vehicle; (ii) Signal Phase and Timing (SPaT) format: the SPaT message provides information about the current state of traffic signals at an intersection, including which phase is currently active and when the signal will change. This information can be used by vehicles to optimize their driving behavior and avoid collisions. In the example message, the header contains the message ID and protocol version, while the data section includes the ID of the intersection, the state of the movement phase, and the time remaining until the next and following phases; (iii) Roadside Alert (RSA) format: the RSA message is used to notify vehicles about hazards or other important information on the road ahead, such as construction zones, accidents, or detours. In the example message, the header contains the message ID and protocol version, while the data section includes the type of alert (construction), the distance to the alert, the direction of the alert, and a text message providing additional details about the alert.

According to an embodiment, there are other possible elements that can be included in each message format, for example, the BSM format may also include information on: acceleration, size and weight, vehicle safety extensions including Brakes, Lights, Wipers, Transmission and powertrain, Vehicle dimensions and Vehicle identification information including identification number and vehicle type.

There are several other message formats available in DSRC protocol besides the three examples provided earlier. Some of these message formats include MAP (Message Assistance for Path Provisioning) format: this message provides a map of the road network, including information about the road layout, speed limits, and other relevant details; CAM (Cooperative Awareness Message) format: similar to the BSM message format, this message provides information about a vehicle's current status, such as speed, position, and heading. CAM messages are typically sent at a higher frequency than BSM messages to support more accurate situational awareness; DENM (Decentralized Environmental Notification Message) format: this message provides information about environmental conditions that may affect driving, such as weather conditions, visibility, and road surface conditions; EV (Emergency Vehicle) format: this message provides information about emergency vehicles, such as their location and direction of travel, to help other drivers safely navigate around them; TCI (Traffic Control Information) format: this message provides information about traffic conditions, such as congestion, accidents, and construction zones, to help drivers make informed decisions about their routes.

Overall, the various message formats available in DSRC protocol support a wide range of use cases, from basic vehicle-to-vehicle communication to more complex applications such as real-time traffic management and emergency response.

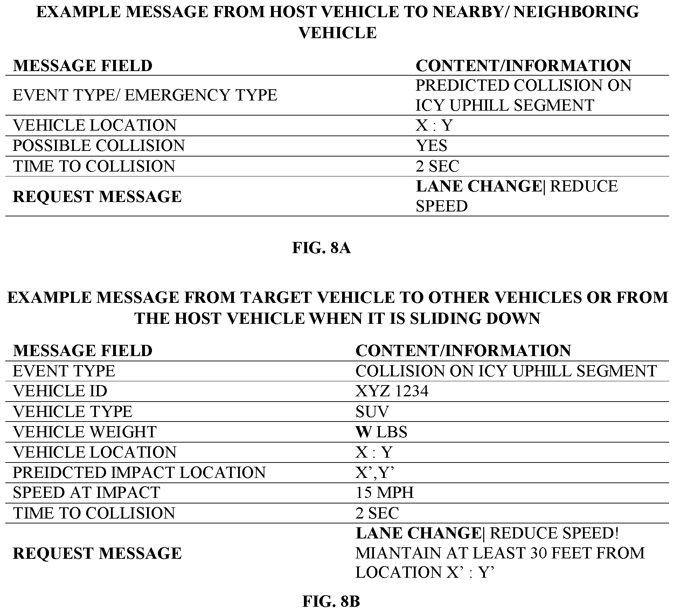

FIG. 8A shows an example message from the host vehicle to nearby/ neighboring vehicles according to an embodiment. It may comprise elements that relate to prediction of an icy uphill road segment and a request message where it may request for at least one of a lane change, reverse, so that a coordinated action can be performed. It may also contain a time to collision, if the collision is imminent, otherwise it may not contain time to possible collision. In an embodiment, the message can be a broadcast message, or a message sent to an individual neighboring vehicle or a group of selected vehicles that need to execute the request. In an embodiment, the request may be for avoiding a predicted collision by the neighboring or nearby vehicles.

FIG. 8B shows an example message from the target vehicle to other vehicles according to an embodiment. In case the target vehicle is not an autonomous vehicle, the signal may be via V2V communication. The host vehicle, being an autonomous vehicle may then further transmit this message to all the nearby vehicles. In an embodiment, it may be the message content when the host vehicle is either sliding or may impact the other vehicles due to icy uphill segments. In an embodiment, the message may comprise the information related to the vehicle type, speed at impact, time to collision etc. It may further comprise a request message to change lanes or reverse, or maintaining a safe distance to avoid the collision, or a message to prepare for a collision.

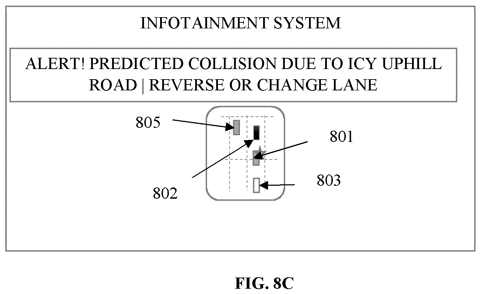

FIG. 8C shows an example alert message displayed in the host vehicle according to an embodiment. In an embodiment, it may comprise of an alert message along with a graphical representation to show that the host vehicle 801 is predicting a collision due to target vehicle 802 on an uphill road segment. It may broadcast the message to other vehicles 803 and 805 to clear the impact zone. In an embodiment the message may also show the start and end points of the uphill segment of the road and the location of each vehicle.

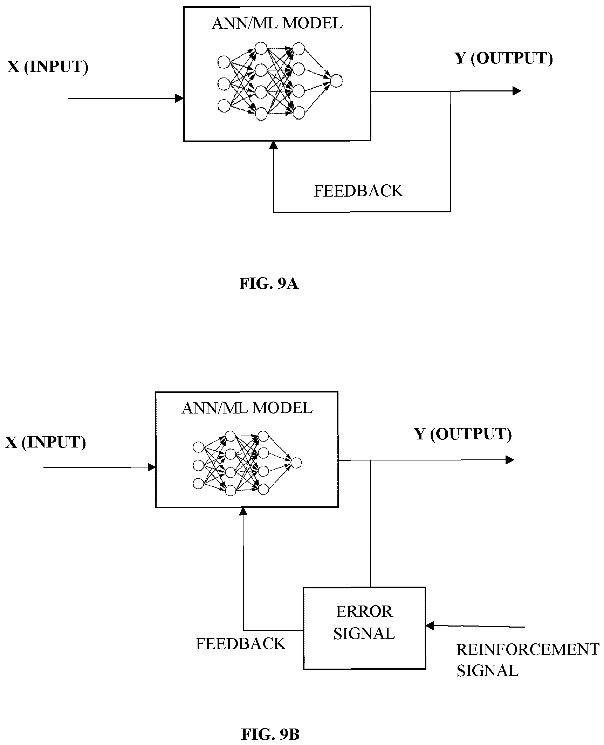

FIG. 9A shows a structure of the neural network / machine learning model with a feedback loop. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, sending data to the next layer of the network. Otherwise, no data is passed to the next layer of the network. A machine learning model or an ANN model may be trained on a set of data to take a request in the form of input data, make a prediction on that input data, and then provide a response. The model may learn from the data. Learning can be supervised learning and/or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict or detect a collision and the severity of the collision based on the input data, such as target vehicle parameters, host vehicle and target vehicle locations and orientations.

In an embodiment, ANNs may be a Deep-Neural Network (DNN), which is a multilayer tandem neural network comprising Artificial Neural Networks (ANN), Convolution Neural Networks (CNN) and Recurrent Neural Networks (RNN) that can recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, and image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes.

The neural network is featured with the feedback loop to adjust the system output dynamically as it learns from the new data. In machine learning, backpropagation and feedback loops are used to train an Artificial Intelligence (AI) model and continuously improve it upon usage. As the incoming data that the model receives increases, there are more opportunities for the model to learn from the data. The feedback loops, or backpropagation algorithms, identify inconsistencies and feed the corrected information back into the model as an input.

Even though the AI/ML model is trained well, with large sets of labeled data and concepts, after a while the models' performance may decline while adding new, unlabeled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabeled data is assimilated. A feedback loop refers to the process by which an AI model's predicted output is reused to train new versions of the model.

Initially, when the AI/MI, model is trained, a few labeled samples comprising both positive and negative examples of the concepts (e.g., vehicle type, various uphill road segments, roof area of a target vehicle, etc.) are used that are meant for the model to learn. Afterward, the model is tested using unlabeled data. By using, for example, deep learning and neural networks, the model can then make predictions on whether the desired concept/s (for e.g., inclination of an uphill road given a detected roof area for a vehicle type, a classification of a road sign, a road surface condition, etc.) are in unlabeled images. Each image is given a probability score where higher scores represent a higher level of confidence in the models' predictions. Where a model gives an image a high probability score, it is auto-labeled with the predicted concept. However, in the cases where the model returns a low probability score, this input may be sent to a controller (maybe a human moderator) which verifies and, as necessary, corrects the result. The human moderator may be used only in exceptional cases. The feedback loop feeds labeled data, auto-labeled or controller-verified, back to the model dynamically and is used as training data so that the system can improve its predictions in real-time and dynamically.

FIG. 9B shows a structure of the neural network / machine learning model with reinforcement learning. The network receives feedback from authorized networked environments. Though the system is similar to supervised learning, the feedback obtained in this case is evaluative, not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced with a reward for each true positive of the output of the system. Feedback loops ensure that AI results do not stagnate. By incorporating a feedback loop, the model output keeps improving dynamically and over usage/time.

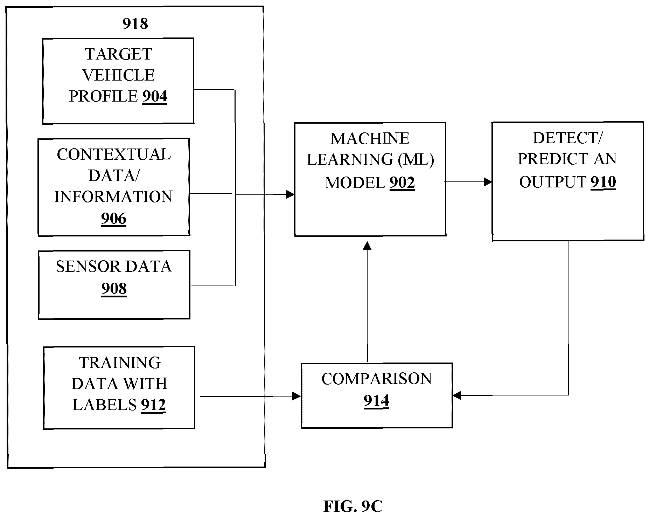

FIG. 9C shows an example block diagram for detecting a collision event on an icy uphill road and / or safe distance to be maintained from the host vehicle during an icy uphill road segment using a machine learning model. The machine learning model 902 may take as input any data associated with the host vehicle and the target vehicle and learn to identify features within the data that are predictive of a collision event. The training data sample may include, for example, the target vehicles information 904, such as the size, dimensions, vehicle type, vehicle model, weight, length, etc. In an embodiment, it relates to systems and methods that identify a target vehicle and its features in real time using an on-board camera and/or other sensors. This vehicle identification and feature information are transmitted to the cloud, where the vehicle identification is coupled with available turning radius and trajectory predictions in the case of a previously identified vehicle of a similar class and built having similar characteristics. Subsequently, the information is used to compute/ estimate a safe distance to be maintained from the host vehicle. The systems and methods of the present disclosure may also provide data analytics information that may be used later to improve vehicle safety. When a host vehicle is near an icy uphill road segment, sensors and cameras of the host vehicle or the like may be used to detect the target vehicle characteristics and estimate a safe distance to be maintained from the host vehicle.

In an embodiment, the training data sample may also include current contextual information 906 relating to the surrounding environment. This may include, for example, location of the host vehicle, location of the target vehicle, current weather conditions, temperature, time of day, traffic conditions in the region, number of lanes, other obstacles, other vehicles on the uphill segment, etc. The system may also garner contextual information 906 from a device associated with the vehicle. For example, through an application installed on the device, such as Google^{®} maps and location services, the system may know the vehicle details.

Real-time sensor data 908 may include, for example, video, image, audio, infrared, temperature, 3D modeling, and any other suitable types of data that capture the current state around the host vehicle. In an embodiment, the real-time sensor data may be processed using one or more machine learning models 902 trained and based on similar types of data to predict real-time features of the target vehicle. The real-time features may include, for example, the target vehicle size, shape, dimensions, signal lights, etc. Information about the target may be used for the estimation of the safe distance to be maintained from the host vehicle. For example, currently detected sensor data and/or previously known information about the target vehicle class and / or dimensions may be used to predict a safe distance to be maintained from the host vehicle.

Any of the aforementioned types of data (e.g., target vehicle data 904, contextual information 906, sensor data 908, or any other data) may correlate with the safe distance computations, and such correlation may be automatically learned by the machine learning model 902. In an embodiment, during training, the machine learning model 902 may process the training data sample (e.g., target vehicle 904 and/or contextual information 906 and, based on the current parameters of the machine learning model 902, detect or predict an output 910 which may be a collision probability and / or safe distance to be maintained from the host vehicle. The detection or prediction 910 of a collision probability and / or safe distance to be maintained from the host vehicle may depend on the training data with labels 912 associated with the training data sample 918. Predicting a collision probability and / or safe distance to be maintained from the host vehicle refers to predicting a future event based on past and present data and most commonly by analysis, estimation of trends or data patterns. Prediction or predictive analysis employs probability based on the data analyses and processing. Detection of collision refers to an onset of the event and the system detecting the same. Predicted events may or may not turn into a collision based on how the turn of events occurs. In an embodiment, during training, the detected event at 910 and the training data with labels 912 may be compared at 914. For example, the comparison 914 may be based on a loss function that measures a difference between the detected collision event 910 and the training data with labels 912. Based on the comparison at 914 or the corresponding output of the loss function, a training algorithm may update the parameters of the machine learning model 902, with the objective of minimizing the differences or loss between subsequent predictions or detections of the event 910 and the corresponding labels 912. By iteratively training in this manner, the machine learning model 902 may "learn" from the different training data samples and become better at detecting various collision events at 910 that are similar to the ones represented by the training labels at 912. In an embodiment, the machine learning model 902 is trained using data which is specific to a type of target for which the model is used for detecting a collision to determine a collision avoidance action. In an embodiment, the machine learning model 902 is trained using data which is general to the vehicle types and is used for detecting a collision probability and thus determining a collision avoidance action.

Using the training data, a machine learning model 902 may be trained so that it recognizes features of input data that signify or correlate to certain event types. For example, a trained machine learning model 902 may recognize data features that signify the likelihood of an emergency situation, as an actionable event. Through training, the machine learning model 902 may learn to identify predictive and non-predictive features and apply the appropriate weights to the features to optimize the machine learning model's 902 predictive accuracy. In embodiments where supervised learning is used and each training data sample 918 has a label 912, the training algorithm may iteratively process each training data sample 918 (including target vehicle data 904, contextual information 906, and/or sensor data 908), and generate a prediction of collision 910 based on the model's 902 current parameters. Based on the comparison 914 results, the training algorithm may adjust the model's 902 parameters/configurations (e.g., weights) accordingly to minimize the differences between the generated predictions of collision event 910 and the corresponding labels 912. Any suitable machine learning model and training algorithm may be used, including, e.g., neural networks, decision trees, clustering algorithms, and any other suitable machine learning techniques. Once trained, the machine learning model 902 may take input data associated with a target vehicle and output one or more predictions that indicate a collision probability based on the host vehicle location and may suggest a safe location to the host vehicle.

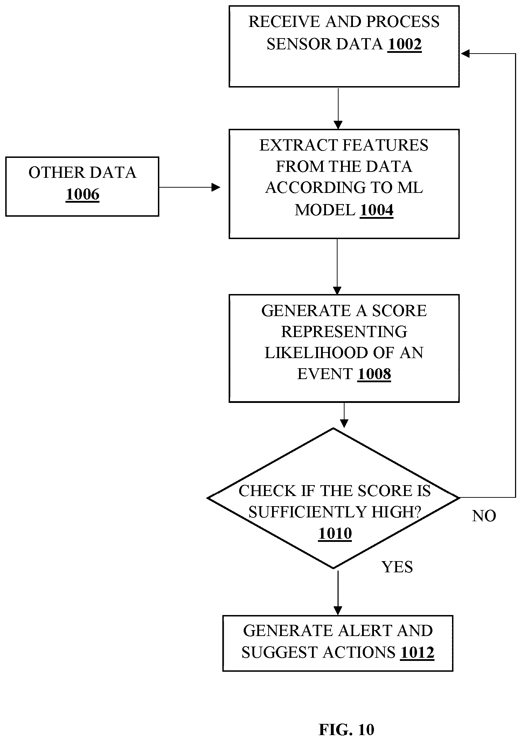

FIG. 10 shows an example flow chart for detecting a collision with a host vehicle on an icy uphill road using a machine learning model. The system may receive data associated with sensor output(s) from one or more sensors in the host vehicle as shown at 1002. Any type of sensor may be used to gather data pertaining to the target vehicle. A sensor output may be, for example, images, videos, audios, LiDAR measures, infrared measures, temperature measures, GPS data, or any other information measured or detected by sensors. In an embodiment, a sensor output may be the result of one or more sensors capturing environmental information associated with the surroundings of the host vehicle, which may include traffic at the location, target vehicle details, number of lanes, traffic around the host vehicle, road surface condition etc. The system may receive any data associated with the sensor output from sensors, including raw sensory output and/or any derivative data. In an embodiment, the system may process the received data and identify any actionable event of interest using a machine learning model, trained using a set of training data. It may receive other data 1006, such as weather conditions, humidity, temperature, driver behavior, tire tread, tire conditions, etc. from other sensors of the vehicle.

As shown at 1004, the system may extract features from the received data according to a machine learning model. The machine learning model is able to automatically do so based on what it learned during the training process. In an embodiment, appropriate weights that were learned during the training process may be applied to the features.

At step 1008, the machine learning model, based on the features of the received data, may generate a score representing a likelihood or confidence that the received data is associated with a particular event type, e.g., a collision when the target vehicle of a certain vehicle type is decelerating, etc.

As shown at 1010, the system may determine whether the score is sufficiently high relative to a threshold or criteria to warrant certain action. If the score is not sufficiently high, thus indicating a false-positive, the system may return to step 1002 and continue to monitor subsequent incoming data. On the other hand, if the score is sufficiently high, then at step 1012 the system may generate an appropriate alert and/or determine an appropriate action/response. In an embodiment, the system may send alerts to appropriate recipients based on the detected event types. For instance, an alert is generated in the host vehicle, and a message is sent to nearby vehicles.

In an embodiment, the system may repeat one or more steps of the method of FIG. 10, where appropriate. In an embodiment, the steps 1002 to 1012 may be performed by the system, any combination of those steps may be performed by any other computing system, for example a remote network or a cloud network. In an embodiment, where machine learning models are used for making such determination, the system may transmit a trained machine learning model to the computing system in the vehicle to allow event-detection to occur locally. This may be desirable since sensor data may be overly large to transmit to the remote system in a timely fashion.

In an embodiment, the system is provided, wherein the facial expression recognition module utilizes a Convolutional Neural Networks (CNN) pre-training process; and/or wherein the machine learning (ML) algorithm contains a bounding box procedure around the subject's face; and/or wherein the bounding box procedure utilizes a Viola-Jones detection algorithm; and/or wherein the face recognition module utilizes Facial Expression Recognition (FER) algorithms. In an embodiment, one or more currently obtained facial expressions from the camera are compared to thresholds for pre-trained emergency classifications to determine when a current classification is an emergency. The use of a recurrent neural network architecture comes from its ability to use past, temporal information for inference on current inputs. Long short term memories (LSTMs) offer a computationally efficient way to train these networks. For example, video sequences of different vehicle types with their trajectory information at a turn can be used to train the LSTMs. By virtue of this training mechanism, the model can predict given real time video input when a collision is imminent given a host vehicle location. According to an embodiment of the system, the bounding box algorithm is used in conjunction with a machine learning algorithm for object detection, wherein the machine learning algorithm is a convolutional neural network (CNN).

In an embodiment, the system may comprise a cyber security module. In one aspect, a secure communication management (SCM) computer device for providing secure data connections is provided. The SCM computer device includes a processor in communication with memory. The processor is programmed to receive, from a first device, a first data message. The first data message is in a standardized data format. The processor is also programmed to analyze the first data message for potential cyber security threats. If the determination is that the first data message does not contain a cyber security threat, the processor is further programmed to convert the first data message into a first data format associated with the vehicle environment and transmit the converted first data message into a first data format associated with the vehicle environment and transmit the converted first data message to the communication module using a first communication protocol associated with the negotiated protocol.

According to an embodiment, secure authentication for data transmissions comprises, provisioning a hardware-based security engine (HSE) located in the cyber security module, said HSE having been manufactured in a secure environment and certified in said secure environment as part of an approved network; performing asynchronous authentication, validation and encryption of data using said HSE, storing user permissions data and connection status data in an access control list used to define allowable data communications paths of said approved network, enabling communications of the cyber security module with other computing system subjects (e.g., communication module) to said access control list, performing asynchronous validation and encryption of data using security engine including identifying a user device (UD) that incorporates credentials embodied in hardware using a hardware-based module provisioned with one or more security aspects for securing the system, wherein security aspects comprising said hardware-based module communicating with a user of said user device and said HSE.

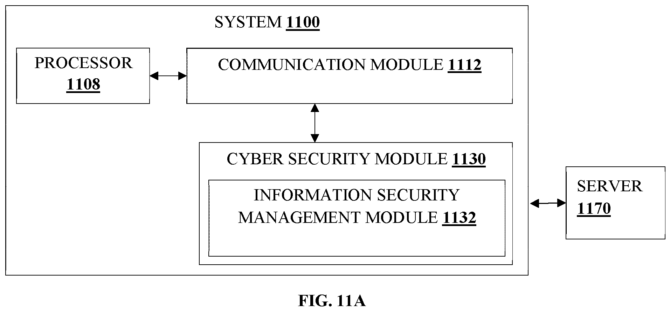

FIG. 11A shows the block diagram of the cyber security module according to an embodiment. In an embodiment, FIG. 11A shows the block diagram of the cyber security module. The communication of data between the system 1100 and the server 1170 through the communication module 1112 is first verified by the information security management module 1132 before being transmitted from the system to the server or from the server to the system. The information security management module is operable to analyze the data for potential cyber security threats, to encrypt the data when no cyber security threat is detected, and to transmit the data encrypted to the system or the server. The system 1100 comprises processor 1108.

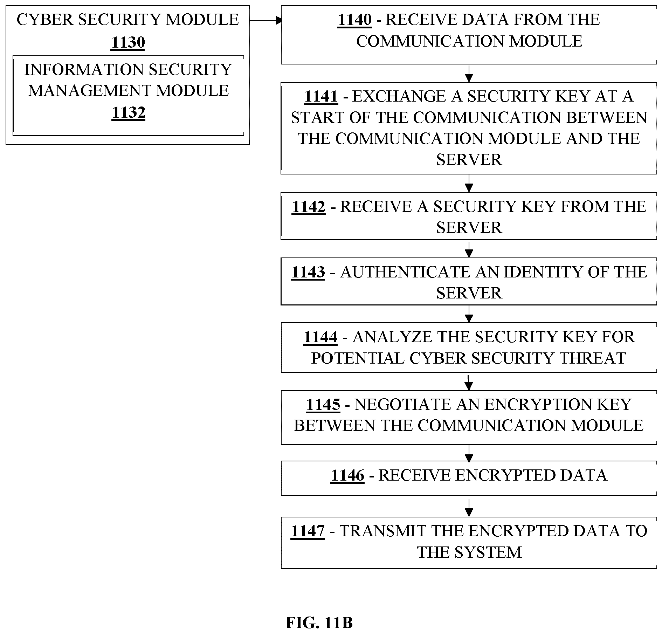

In an embodiment, the cyber security module further comprises an information security management module providing isolation between the system and the server. FIG. 11B shows the flowchart of securing the data through the cyber security module 1130. At step 1140, the information security management module is operable to receive data from the communication module. At step 1141, the information security management module exchanges a security key at the start of the communication between the communication module and the server. At step 1142, the information security management module receives a security key from the server. At step 1143, the information security management module authenticates an identity of the server by verifying the security key. At step 1144, the information security management module analyzes the security key for potential cyber security threats. At step 1145, the information security management module negotiates an encryption key between the communication module and the server. At step 1146, the information security management module receives the encrypted data. At step 1147, the information security management module transmits the encrypted data to the server when no cyber security threat is detected.

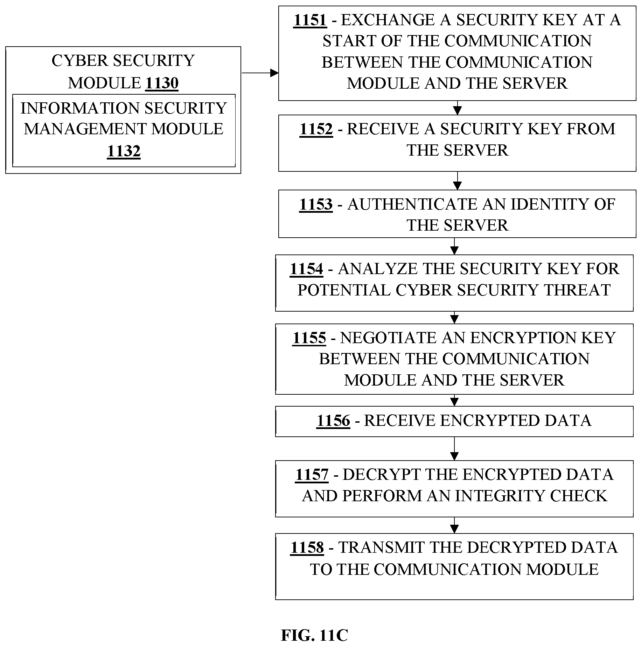

In an embodiment, FIG. 11C shows the flowchart of securing the data through the cyber security module 1130. At step 1151, the information security management module is operable to: exchange a security key at the start of the communication between the communication module and the server. At step 1152, the information security management module receives a security key from the server. At step 1153, the information security management module authenticates an identity of the server by verifying the security key. At step 1154, the information security management module analyzes the security key for potential cyber security threats. At step 1155, the information security management module negotiates an encryption key between the communication module and the server. At step 1156, the information security management module receives encrypted data. At step 1157, the information security management module decrypts the encrypted data, and performs an integrity check of the decrypted data. At step 1158, the information security management module transmits the decrypted data to the communication module when no cyber security threat is detected.

In an embodiment, the integrity check is a hash-signature verification using a Secure Hash Algorithm 256 (SHA256) or a similar method. In an embodiment, the information security management module is configured to perform asynchronous authentication and validation of the communication between the communication module and the server.

In an embodiment, the information security management module is configured to raise an alarm if a cyber security threat is detected. In an embodiment, the information security management module is configured to discard the encrypted data received if the integrity check of the encrypted data fails.

In an embodiment, the information security management module is configured to check the integrity of the decrypted data by checking accuracy, consistency, and any possible data loss during the communication through the communication module.

In an embodiment, the server is physically isolated from the system through the information security management module. When the system communicates with the server as shown in FIG. 11A, identity authentication is first carried out on the system and the server. The system is responsible for communicating/exchanging a public key of the system and a signature of the public key with the server. The public key of the system and the signature of the public key are sent to the information security management module. The information security management module decrypts the signature and verifies whether the decrypted public key is consistent with the received original public key or not. If the decrypted public key is verified, the identity authentication is passed. Similarly, the system and the server carried out identity authentication on the information security management module. After the identity authentication is passed on to the information security management module, the two communication parties, the system, and the server, negotiate an encryption key and an integrity check key for data communication of the two communication parties through the authenticated asymmetric key. A session ID number is transmitted in the identity authentication process, so that the key needs to be bound with the session ID number; when the system sends data to the outside, the information security gateway receives the data through the communication module, performs integrity authentication on the data, then encrypts the data through a negotiated secret key, and finally transmits the data to the server through the communication module. When the information security management module receives data through the communication module, the data is decrypted first, integrity verification is carried out on the data after decryption, and if verification is passed, the data is sent out through the communication module; otherwise, the data is discarded. In an embodiment, the identity authentication is realized by adopting an asymmetric key with a signature.

In an embodiment, the signature is realized by a pair of asymmetric keys which are trusted by the information security management module and the system, wherein the private key is used for signing the identities of the two communication parties, and the public key is used for verifying that the identities of the two communication parties are signed. Signing identity comprises a public and a private key pair. In other words, signing identity is referred to as the common name of the certificates which are installed in the user's machine.

In an embodiment, both communication parties need to authenticate their own identities through a pair of asymmetric keys, and a task in charge of communication with the information security management module of the system is identified by a unique pair of asymmetric keys.

In an embodiment, the dynamic negotiation key is encrypted by adopting an Rivest-Shamir-Adleman (RSA) encryption algorithm. RSA is a public-key cryptosystem that is widely used for secure data transmission. The negotiated keys include a data encryption key and a data integrity check key.

In an embodiment, the data encryption method is a Triple Data Encryption Algorithm (3DES) encryption algorithm. The integrity check algorithm is a Hash-based Message Authentication Code (HMAC-MD5-128) algorithm. When data is output, the integrity check calculation is carried out on the data, the calculated Message Authentication Code (MAC) value is added with the header of the value data message, then the data (including the MAC of the header) is encrypted by using a 3DES algorithm, the header information of a security layer is added after the data is encrypted, and then the data is sent to the next layer for processing. In an embodiment the next layer refers to a transport layer in the Transmission Control Protocol / Internet Protocol (TCP/IP) model.

The information security management module ensures the safety, reliability, and confidentiality of the communication between the system and the server through the identity authentication when the communication between the two communication parties starts the data encryption and the data integrity authentication. The method is particularly suitable for an embedded platform which has less resources and is not connected with a Public Key Infrastructure (PKI) system and can ensure that the safety of the data on the server cannot be compromised by a hacker attack under the condition of the Internet by ensuring the safety and reliability of the communication between the system and the server.

Various non-limiting aspects of various embodiments described herein are presented in the following clauses.
1. A system, comprising:
   a processor, a computer vision module, and a control module;
   wherein the system is operable to:
      determine, by the control module of a host vehicle, a road surface condition, wherein the road surface condition is at least one of an ice, wet, and snow;
      adjust, by the control module of the host vehicle, a safe distance value of the host vehicle based on the road surface condition;
      detect, by the control module of the host vehicle, a vehicle type, a speed, and a visible roof area of a target vehicle, wherein the target vehicle is a vehicle that is ahead of the host vehicle;
      determine, by the control module of the host vehicle, an uphill road that the host vehicle is approaching;
      determine, by the control module of the host vehicle, that the target vehicle is slowing down based on a change in speed of the target vehicle in real-time;
      predicting, by the processor, a collision between the host vehicle and the target vehicle; and
      determine, by the control module of the host vehicle, a collision avoidance action for the host vehicle to avoid the collision with the target vehicle.
2. The system of clause 1, wherein the system is operable to be a component of the host vehicle.
3. The system of clause 1, wherein the road surface condition is determined by receiving a real-time weather broadcast.
4. The system of clause 1, wherein the road surface condition is determined by a map showing an icy road in a route.
5. The system of clause 1, wherein the road surface condition is determined by detecting a road condition in real-time via the computer vision module.
6. The system of clause 5, wherein the road surface condition is determined by analyzing a scattering of an emitted beam of light on a road surface using a filtering technique on an image that is captured by the computer vision module.
7. The system of clause 1, wherein the road surface condition is detected by using vehicle dynamics sensor data and an image obtained of surroundings ahead of the host vehicle by a camera, wherein the camera is a monochrome camera.
8. The system of clause 7, wherein a surface condition observer classifies a road condition based on an evaluation of the image from the camera and comparing the image with the vehicle dynamics sensor data.
9. The system of clause 8, wherein the surface condition observer further considers a local weather data and derives the road surface condition, wherein the local weather data comprises a temperature, a humidity value, a rainfall, a sleet fall, a snow fall, a wiper activity, and a cloud data.
10. The system of clause 1, wherein the road surface condition is detected by identifying a road sign using the computer vision module.
11. The system of clause 1, wherein the road surface condition is detected by Vehicle-to-Infrastructure (V2I) communication.
12. The system of clause 1, wherein the road surface condition is determined by determining that a neighboring vehicle is having difficulty in navigation.
13. The system of clause 1, wherein the road surface condition is determined by receiving a broadcast message from a neighboring vehicle about the road surface condition.
14. The system of clause 1, wherein the road surface condition is determined by a frictional coefficient between a road on which the host vehicle is traveling and a tire of the host vehicle via an accelerometer sensor.
15. The system of clause 1, wherein the road surface condition is determined by a road condition sensor, wherein the road condition sensor is at least one of a temperature sensor, an infrared sensor, an accelerometer, a GPS sensor, and a humidity sensor.
16. The system of clause 1, wherein the safe distance value is set to a higher value than that of a value on a dry road surface condition.
17. The system of clause 1, wherein the system is further operable to determine a new route with least number of icy roads.
18. The system of clause 1, wherein the vehicle type is detected via the computer vision module by detecting a license plate number of the target vehicle.
19. The system of clause 18, wherein the license plate number is matched with the vehicle type by referencing a database.
20. The system of clause 1, wherein the host vehicle is further operable to detect the vehicle type and a vehicle model of the target vehicle.
21. The system of clause 1, wherein the speed of the target vehicle is determined in real-time via the computer vision module comprising a camera, a lidar, a GPS, and a radar.
22. The system of clause 1, wherein the computer vision module further comprises an artificial intelligence engine and a machine learning algorithm.
23. The system of clause 1, wherein the speed of the target vehicle is determined in real-time via a radar.
24. The system of clause 1, wherein the visible roof area of the target vehicle is detected using a bounding box algorithm.
25. The system of clause 24, wherein the bounding box algorithm is used in conjunction with a machine learning algorithm for object detection, wherein the machine learning algorithm is a convolutional neural network (CNN).
26. The system of clause 1, wherein the uphill road is determined based on the vehicle type of the target vehicle, a speed of the target vehicle, and the visible roof area of the target vehicle.
27. The system of clause 1, wherein the uphill road is determined based on a GPS location of the target vehicle and map data to determine a slope of the uphill road.
28. The system of clause 1, wherein the host vehicle maps the visible roof area by the vehicle type, a vehicle model, and the speed to determine an inclination of the uphill road.
29. The system of clause 1, wherein the host vehicle is operable to detect a change in the visible roof area to determine an inclination of the uphill road by a continuous sequence of readings which are timed as per a predetermined interval.
30. The system of clause 1, wherein the host vehicle is operable to detect a change in the visible roof area of a vehicle coming in opposite direction of the target vehicle in another lane to determine an inclination of the uphill road by a continuous sequence of readings which are timed as per a predetermined interval.
31. The system of clause 1, wherein the host vehicle is operable to detect a start of the uphill road and an end of the uphill road.
32. The system of clause 1, wherein the host vehicle is operable to notify via a notification to a driver of the host vehicle of an approaching uphill road, wherein the notification is at least one of a sound, a tactile cue, a visual cue, and a text message.
33. The system of clause 1, wherein the host vehicle is operable to detect a number of lanes on the uphill road via the computer vision module.
34. The system of clause 1, wherein the host vehicle is operable to correlate the visible roof area to determine an inclination of the uphill road based on the vehicle type and a vehicle model.
35. The system of clause 1, wherein the safe distance value of the host vehicle is further increased based on an inclination of the uphill road.
36. The system of clause 1, wherein the change in speed of the target vehicle is computed by the host vehicle from data of the speed that is gathered over time.
37. The system of clause 1, wherein the host vehicle is operable to detect whether the target vehicle is losing speed.
38. The system of clause 1, wherein the host vehicle is operable to detect whether the target vehicle is losing traction.
39. The system of clause 1, wherein the host vehicle is operable to predict whether the speed of the target vehicle approaches zero.
40. The system of clause 1, wherein the host vehicle is operable to predict whether the target vehicle will move backwards on the uphill road via the computer vision module using an artificial intelligence algorithm.
41. The system of clause 1, wherein the host vehicle is operable to detect the target vehicle moving backwards on the uphill road via the computer vision module comprising a radar.
42. The system of clause 1, wherein the host vehicle via rear view camera is operable to find vehicles behind the host vehicle.
43. The system of clause 1, wherein the host vehicle via lidar and radar finds vehicles in other lanes.
44. The system of clause 1, wherein the host vehicle is operable to establish a communication via a communication module with the target vehicle to obtain information on a state of the target vehicle, wherein the state comprises the change in speed of the target vehicle and an uphill road inclination.
45. The system of clause 44, wherein the uphill road inclination is obtained using a longitudinal accelerometer sensor, a GPS, an Inertial Measurement Unit (IMU), a lidar, a radar, and a camera.
46. The system of clause 44, wherein the communication between the host vehicle and the target vehicle is via a Vehicle-to-Vehicle (V2V) communication.
47. The system of clause 46, wherein the Vehicle-to-Vehicle (V2V) communication is based on wireless communication protocols using at least one of a Dedicated Short-Range Communications (DSRC), and a Cellular Vehicle-to-Everything (C-V2X) technology.
48. The system of clause 44, wherein the communication between the host vehicle and the target vehicle is via an internet connection.
49. The system of clause 1, wherein the collision avoidance action comprises generating an alert in the host vehicle, wherein the alert is at least one of a text message, a visual cue, a sound alert, a tactile cue, and a vibration.
50. The system of clause 1, wherein the collision avoidance action comprises further increasing the safe distance value between the host vehicle and the target vehicle.
51. The system of clause 1, wherein the collision avoidance action comprises waiting until the target vehicle crosses the uphill road.
52. The system of clause 1, wherein the collision avoidance action comprises at least one of initiating a reverse movement by the host vehicle; and initiating a lane change by the host vehicle.
53. The system of clause 1, wherein the collision avoidance action comprises broadcasting a message to vehicles behind the host vehicle about the target vehicle sliding down the uphill road.
54. The system of clause 1, wherein the collision avoidance action comprises broadcasting, a message to a neighboring vehicle, wherein the message comprises an instruction of a maneuver for the neighboring vehicle to avoid an impending collision using a collective and coordinated action.
55. The system of clause 1, wherein the collision avoidance action comprises predicting the collision and alerting a driver of the host vehicle about deployment of air bags during the collision.
56. The system of clause 1, wherein the collision avoidance action comprises predicting the collision and alerting a driver of the host vehicle and advising the driver to brace for impact posture.
57. The system of clause 1, wherein the collision avoidance action comprises predicting the collision and alerting a driver of the host vehicle and advising him to leave the host vehicle.
58. The system of clause 1, wherein the collision avoidance action comprises alerting the target vehicle about an impending collision.
59. The system of clause 1, wherein the collision avoidance action comprises alerting neighboring vehicles about the collision.
60. The system of clause 1, wherein the collision avoidance action comprises at least one of
   generating an alert in the host vehicle;
   maintaining, at least the safe distance value between the host vehicle and the target vehicle;
   initiating a reverse movement by the host vehicle;
   initiating a lane change by the host vehicle;
   alerting the target vehicle, about an impending collision; and
   broadcasting, a message to a neighboring vehicle, wherein the message comprises an instruction of a maneuver for the neighboring vehicle for avoiding the impending collision using a collective and coordinated action.
61. The system of clause 1, wherein the collision avoidance action is determined and executed in real-time until the host vehicle crosses the uphill road.
62. The system of clause 1, wherein the collision avoidance action is determined via the computer vision module comprising artificial intelligence engine, wherein the artificial intelligence engine comprises a machine learning algorithm.
63. The system of clause 1, wherein the collision avoidance action further comprises activating a camera of the computer vision module to record surroundings and the host vehicle.
64. The system of clause 1, wherein the collision avoidance action comprises alerting a third party about an impending collision.
65. The system of clause 64, wherein the third party is an emergency service.
66. The system of clause 1, wherein the system is further configured for autonomously executing the collision avoidance action by the host vehicle.
67. A method comprising:
   determining, by a processor, a road surface condition, wherein the road surface condition is at least one of an ice, wet, and snow;
   adjusting, by the processor, a safe distance value of a host vehicle based on the road surface condition;
   detecting, by a computer vision module, a vehicle type, a speed, and a visible roof area of a target vehicle, wherein the target vehicle is a vehicle ahead of the host vehicle;
   determining, by the processor, an uphill road that the host vehicle is approaching;
   determining, by the processor, that the target vehicle is slowing down based on a change in speed of the target vehicle in real-time;
   predicting, by the processor, a collision between the host vehicle and the target vehicle; and
   determining, by the processor, a collision avoidance action for the host vehicle to avoid the collision with the target vehicle.
68. The method of clause 67, wherein the road surface condition is determined by detecting a road condition in real-time via the computer vision module.
69. The method of clause 67, wherein the uphill road is determined based on the vehicle type of the target vehicle, a speed of the target vehicle, and the visible roof area of the target vehicle.
70. The method of clause 67, wherein the collision avoidance action comprises generating an alert in the host vehicle, wherein the alert is at least one of a text message, a visual cue, a sound alert, a tactile cue, and a vibration.
71. The method of clause 67, wherein the collision avoidance action comprises further increasing the safe distance value between the host vehicle and the target vehicle.
72. The method of clause 67, wherein the collision avoidance action comprises waiting until the target vehicle crosses the uphill road.
73. The method of clause 67, wherein the collision avoidance action comprises at least one of initiating a reverse movement by the host vehicle; and initiating a lane change by the host vehicle.
74. The method of clause 67, wherein the collision avoidance action comprises broadcasting a message to vehicles behind the host vehicle about the target vehicle sliding down the uphill road.
75. The method of clause 67, wherein the collision avoidance action comprises broadcasting, a message to a neighboring vehicle, wherein the message comprises an instruction of a maneuver for the neighboring vehicle to avoid an impending collision using a collective and coordinated action.
76. The method of clause 67, wherein the collision avoidance action comprises predicting the collision and alerting a driver of the host vehicle about deployment of air bags during the collision.
77. The method of clause 67, wherein the collision avoidance action comprises predicting the collision and alerting a driver of the host vehicle and advising the driver to brace for impact posture.
78. The method of clause 67, wherein the collision avoidance action comprises predicting the collision and alerting a driver of the host vehicle and advising him to leave the host vehicle.
79. The method of clause 67, wherein the collision avoidance action comprises alerting the target vehicle about an impending collision.
80. The method of clause 67, wherein method is further configured for autonomously executing the collision avoidance action by the host vehicle.
81. A non-transitory computer-readable medium having stored thereon instructions executable by a computer system to perform operations comprising:
   determining, by a processor, a road surface condition, wherein the road surface condition is at least one of an ice, wet, and snow;
   adjusting, by the processor, a safe distance value of a host vehicle based on the road surface condition;
   detecting, by a computer vision module, a vehicle type, a speed, and a visible roof area of a target vehicle, wherein the target vehicle is a vehicle ahead of the host vehicle;
   determining, by the processor, an uphill road that the host vehicle is approaching;
   determining, by the processor, that the target vehicle is slowing down based on a change in speed of the target vehicle in real-time;
   predicting, by the processor, a collision between the host vehicle and the target vehicle; and
   determining, by the processor, a collision avoidance action for the host vehicle to avoid the collision with the target vehicle.
82. The non-transitory computer-readable medium of clause 81, wherein the road surface condition is determined by detecting a road condition in real-time via the computer vision module.
83. The non-transitory computer-readable medium of clause 81, wherein the uphill road is determined based on the vehicle type of the target vehicle, a speed of the target vehicle, and the visible roof area of the target vehicle.
84. The non-transitory computer-readable medium of clause 81, wherein the collision avoidance action comprises generating an alert in the host vehicle, wherein the alert is at least one of a text message, a visual cue, a sound alert, a tactile cue, and a vibration.
85. The non-transitory computer-readable medium of clause 81, wherein the collision avoidance action comprises further increasing the safe distance value between the host vehicle and the target vehicle.
86. The non-transitory computer-readable medium of clause 81, wherein the non-transitory computer-readable medium is further configured for autonomously executing the collision avoidance action by the host vehicle.
87. The non-transitory computer-readable medium of clause 81, wherein the collision avoidance action comprises at least one of initiating a reverse movement by the host vehicle; and initiating a lane change by the host vehicle.
88. The non-transitory computer-readable medium of clause 81, wherein the collision avoidance action comprises broadcasting a message to vehicles behind the host vehicle about the target vehicle sliding down the uphill road.
89. The non-transitory computer-readable medium of clause 81, wherein the collision avoidance action comprises broadcasting, a message to a neighboring vehicle, wherein the message comprises an instruction of a maneuver for the neighboring vehicle to avoid an impending collision using a collective and coordinated action.
90. The non-transitory computer-readable medium of clause 81, wherein the collision avoidance action comprises at least one of:
   generating an alert in the host vehicle;
   maintaining, at least the safe distance value between the host vehicle and the target vehicle;
   initiating a reverse movement by the host vehicle;
   initiating a lane change by the host vehicle;
   alerting the target vehicle, about an impending collision; and
   broadcasting, a message to a neighboring vehicle, wherein the message comprises an instruction of a maneuver for the neighboring vehicle for avoiding the impending collision using a collective and coordinated action.

## Claims

1. A system (340), comprising:
a processor (342), a computer vision module (344), and a control module (346);
wherein the system (340) is operable to:
determine, by the processor (342), a road surface condition, wherein the road surface condition is at least one of an ice, wet, and snow (302);
adjust, by the processor (342), a safe distance value of a host vehicle based on the road surface condition (304);
detect, by the computer vision module (344), a vehicle type, a speed, and a visible roof area of a target vehicle, wherein the target vehicle is a vehicle that is ahead of the host vehicle (306);
determine, by the processor (342), an uphill road that the host vehicle is approaching (308);
determine, by the processor (342), that the target vehicle is slowing down (310);
predict, by the processor (342), a collision between the host vehicle and the target vehicle (312); and
determine, by the processor (342), a collision avoidance action for the host vehicle to avoid the collision with the target vehicle (314).

2. The system (340) of claim 1, wherein the system (340) is operable to be a component of the host vehicle, wherein the host vehicle is an autonomous vehicle, and wherein the system is in particular configured to autonomously execute, by the control module (346), the collision avoidance action by the host vehicle.

3. The system (340) of claim 1, wherein the road surface condition is determined in real-time by analyzing a scattering of an emitted beam of light on a road surface using a filtering technique on an image that is captured by the computer vision module; and wherein the computer vision module comprises a machine learning algorithm.

4. The system (340) of claim 1, wherein an increase in the safe distance value is determined based on a weight of the target vehicle, the vehicle type of the target vehicle.

5. The system (340) of claim 1, wherein the speed of the target vehicle is determined in real-time via the computer vision module comprising a camera, a lidar, a GPS, and a radar.

6. The system (340) of claim 1, wherein the visible roof area of the target vehicle is detected using a bounding box algorithm; and wherein the bounding box algorithm is used in conjunction with a machine learning algorithm, wherein the machine learning algorithm is a convolutional neural network (CNN).

7. The system (340) of claim 1, wherein an inclination of the uphill road is determined based on the vehicle type of the target vehicle and the visible roof area of the target vehicle.

8. The system (340) of claim 1, wherein the collision avoidance action comprises generating an alert in the host vehicle, wherein the alert is at least one of a text message, a visual cue, a sound alert, a tactile cue, and a vibration and/or wherein the collision avoidance action comprises at least one of initiating a reverse movement by the host vehicle; and/or initiating a lane change by the host vehicle and/or autonomously executing, by the control module (344), the collision avoidance action by the host vehicle.

9. The system (340) of claim 1, wherein the collision avoidance action comprises broadcasting a message to vehicles behind the host vehicle about the target vehicle sliding down the uphill road, and/or wherein the collision avoidance action comprises broadcasting the message to a neighboring vehicle, wherein the message comprises at least one of alerting the target vehicle about an impending collision and an instruction of a maneuver for the neighboring vehicle to avoid the impending collision using a collective and coordinated action.

10. A method (300) comprising:
determining, by a processor of a host vehicle, a road surface condition, wherein the road surface condition is at least one of an ice, wet, and snow (302);
adjusting, by the processor, a safe distance value of the host vehicle based on the road surface condition (304);
detecting, by a computer vision module, a vehicle type, a speed, and a visible roof area of a target vehicle, wherein the target vehicle is a vehicle ahead of the host vehicle (306);
determining, by the processor, an uphill road that the host vehicle is approaching (308);
determining, by the processor, that the target vehicle is slowing down (310);
predicting, by the processor, a collision between the host vehicle and the target vehicle (312); and
determining, by the processor, a collision avoidance action for the host vehicle to avoid the collision (314).

11. The method (300) of claim 10, wherein the road surface condition is determined by at least one of a real-time weather broadcast, a map showing an icy road in a route, identifying a road sign, determining that a nearby vehicle is having difficulty in navigation, receiving a broadcast message from the nearby vehicle, analyzing the road surface condition in real-time via the computer vision module.

12. The method (300) of claim 10, wherein the uphill road and an inclination of the uphill road is determined based on a GPS location of the target vehicle and map data, and/or wherein the host vehicle is operable to detect a change in the visible roof area to determine the inclination of the uphill road by a continuous sequence of readings, which are timed as per a predetermined interval.

13. The method (300) of claim 10, wherein the collision avoidance action comprises predicting the collision and alerting a driver of the host vehicle about deployment of air bags during the collision and advising the driver to brace for impact posture and activating a camera of the computer vision module to record surroundings and the host vehicle.

14. A non-transitory computer-readable medium (374) having stored thereon instructions executable by a computer system (371) to perform operations comprising:
determining, by a processor (372) of a host vehicle, a road surface condition, wherein the road surface condition is at least one of an ice, wet, and snow (302);
adjusting, by the processor (372), a safe distance value of the host vehicle based on the road surface condition (304);
detecting, by a computer vision module, a vehicle type, a speed, and a visible roof area of a target vehicle, wherein the target vehicle is a vehicle ahead of the host vehicle (306);
determining, by the processor (372), an uphill road that the host vehicle is approaching (308);
determining, by the processor (372), that the target vehicle is slowing down (310);
predicting, by the processor (372), a collision between the host vehicle and the target vehicle (312); and
determining, by the processor (372), a collision avoidance action for the host vehicle to avoid the collision (314).

15. The non-transitory computer-readable medium of claim 14, wherein the collision avoidance action comprises alerting a third party about an impending collision, wherein the third party is an emergency service.
